(19) Europäisches Patentamt
European Patent Office
Office européen des brevets

(11) **EP 3 300 294 B1**

(12) **EUROPEAN PATENT SPECIFICATION**

(45) Date of publication and mention of the grant of the patent:
**07.06.2023 Bulletin 2023/23**

(21) Application number: **15892654.3**

(22) Date of filing: **30.06.2015**

(51) International Patent Classification (IPC):
**H04L 9/06** *(2006.01)*

(52) Cooperative Patent Classification (CPC):
**H04L 9/06**

(86) International application number:
**PCT/KR2015/006730**

(87) International publication number:
**WO 2016/186241 (24.11.2016 Gazette 2016/47)**

(54) **DATA ENCRYPTION APPARATUS AND METHOD, AND DATA DECRYPTION APPARATUS AND METHOD**

DATENVERSCHLÜSSELUNGSVORRICHTUNG UND VERFAHREN SOWIE DATENENTSCHLÜSSELUNGSVORRICHTUNG UND VERFAHREN

APPAREIL ET PROCÉDÉ DE CHIFFREMENT DE DONNÉES, ET APPAREIL ET PROCÉDÉ DE DÉCRYPTAGE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2015 KR 20150069666**

(43) Date of publication of application:
**28.03.2018 Bulletin 2018/13**

(73) Proprietor: **Samsung Sds Co., Ltd.,**
**Seoul 138-240 (KR)**

(72) Inventors:
• **CHOI, Kyu-Young**
**Seoul 138-240 (KR)**
• **MOON, Duk-Jae**
**Seoul 138-240 (KR)**
• **CHO, Ji-Hoon**
**Seoul 138-240 (KR)**

(74) Representative: **Grünecker Patent- und**
**Rechtsanwälte**
**PartG mbB**
**Leopoldstraße 4**
**80802 München (DE)**

(56) References cited:
**US-A1- 2004 028 227     US-A1- 2008 085 003**
**US-A1- 2012 002 807     US-A1- 2012 201 374**
**US-A1- 2012 281 832     US-A1- 2012 281 832**
**US-A1- 2015 124 961**

• **EL-MAHALLAWY M S ET AL: "Robust Blind and Secure Biometric Watermarking Based on Partial Multi-Map Chaotic Encryption", NEW TECHNOLOGIES, MOBILITY AND SECURITY (NTMS), 2011 4TH IFIP INTERNATIONAL CONFERENCE ON, IEEE, 7 February 2011 (2011-02-07), pages 1-5, XP031982287, DOI: 10.1109/NTMS.2011.5721049 ISBN: 978-1-4244-8705-9**

**Description**

[Technical Field]

Embodiments set forth herein relate to data encryption and decryption technology.

[Background Art]

If data is encrypted using a conventional block encryption algorithm, when an cryptographic key is exposed to an attacker, the encrypted data may be decrypted, and thus, the data may be exposed. Accordingly, protecting/managing the cryptographic key is a very important issue.

Generally, in data encryption using a block cipher, the length of an cryptographic key, the size of an encrypted block, and a number of rounds are factors influencing security. Among such factors, a mode of operation in which a message is divided and encrypted in units of blocks plays an important role. In a block encryption algorithm employing the mode of operation, encryption is performed in units of blocks and the same cryptographic key is used for all the blocks.

However, in the data encryption using the conventional block encryption algorithm, the number of encrypted data blocks increases as the length of data to be encrypted increases. Thus, the data is encrypted using the encryption algorithm a number of times corresponding to the number of the encrypted data blocks. Accordingly, since a data encryption speed decreases as the amount of data increases, it is difficult to use the data encryption using the conventional block encryption algorithm when a large amount of data is encrypted, i.e., when encryption speed is important. US 2004/028227 A1 discloses a method of partially encrypting streaming media: receiving media in a streaming-media format; partitioning the stream-formatted media into cloak data and non-cloak data; and encrypting the cloak data such that less than all of the stream-formatted media is encrypted.

EL-MAHALLAWY M S ET AL, "Robust Blind and Secure Biometric Watermarking Based on Partial Multi-Map Chaotic Encryption", NEW TECHNOLOGIES, MOBILITY AND SECURITY (NTMS), 2011 4TH IFIP INTERNATIONAL CONFERENCE ON, IEEE, 7 February 2011 proposes a novel Commutative Watermarking and Partial Encryption (CWPE) algorithm using single level 2-Dimension Discrete Wavelet Transform (CWPE 2D DWT) and Multi-Map Orbit Hopping Chaotic System (MMOH-CS).

A further prior art solution is disclosed in document US 2012/281832 A1.

[Disclosure]

[Technical Problem]

Embodiments set forth herein are directed to a new technique for encrypting data and decrypting the ciphertext data using a block cipher scheme and an encoding scheme, which allows encrypting and decrypting data in a fast and secure way.

[Technical Solution]

This object is solved by the subject matter of the independent claims.

Preferred embodiments are defined by the dependent claims.

According to one aspect of the present embodiments, a data encryption apparatus includes a divider configured to divide data into a plurality of plaintext blocks; an encryptor configured to encrypt at least one among some blocks of the plurality of plaintext blocks and an initial value for encrypting the data using an cryptographic key-based block encryption scheme; and an encoder configured to encode remaining plaintext blocks, which are not encrypted by the block encryption scheme, using a non-cryptographic key-based encoding scheme.

The block encryption scheme may include an encryption scheme using a symmetric key or an asymmetric key.

The block encryption scheme may include a white box-based encryption scheme.

The non-cryptographic key-based encoding scheme may include an encoding scheme using at least one among a logical operation, a one-way function, a one-way permutation, and a logical function.

The initial value may include an initialization vector or a counter value.

The encryptor may encrypt the some blocks using the initialization vector or the counter value.

The encoder may encode the remaining plaintext blocks using the initialization vector or the counter value.

The encoder may sequentially encode each of the remaining plaintext blocks using a previously generated ciphertext block.

The encoder may sequentially encode each of the remaining plaintext blocks using a previously generated ciphertext block and a plaintext block used to generate the previously generated ciphertext block.

According to another aspect of the present embodiments, a data decryption apparatus includes a decryptor configured to decrypt some blocks of encrypted data using an cryptographic key-based block decryption scheme, and a decoder configured to decode remaining blocks of the encrypted data using a non-cryptographic key-based decoding scheme.

The block decryption scheme may include a decryption scheme using a symmetric key or an asymmetric key.

The block decryption scheme may include a white box-based decryption scheme.

The non-cryptographic key-based decoding scheme may include a decoding scheme using at least one among a logical operation, a one-way function, a one-way permutation, and a logical function.

The decoder may decode the remaining blocks using an initialization vector or a counter value used to generate the encrypted data.

The decoder may sequentially decode each of the remaining blocks using a ciphertext block used to generate a previously generated plaintext block.

The decoder may sequentially decode each of the remaining blocks using a previously generated plaintext block and a ciphertext block used to generate the previously generated plaintext block.

According to another aspect of the present embodiments, a data encryption method includes dividing data into a plurality of plaintext blocks; encrypting at least one among some blocks of the plurality of plaintext blocks and an initial value for encrypting the data using an cryptographic key-based block encryption scheme; and encoding remaining plaintext blocks using a non-cryptographic key-based encoding scheme.

The block encryption scheme may include an encryption scheme using a symmetric key or an asymmetric key.

The block encryption scheme may include a white box-based encryption scheme.

The non-cryptographic key-based encoding scheme may include an encoding scheme using at least one among a logical operation, a one-way function, a one-way permutation, and a logical function.

The initial value may include an initialization vector or a counter value.

The encrypting of at least one among some blocks of the plurality of plaintext blocks and the initial value for encrypting the data may include encrypting the some blocks using the initialization vector or the counter value.

The encoding of the remaining plaintext blocks may include encoding the remaining blocks using the initialization vector or the counter value.

The encoding of the remaining plaintext blocks may include sequentially encoding each of the remaining blocks using a previously generated ciphertext block.

The encoding of the remaining plaintext blocks may include sequentially encoding each of the remaining blocks using a previously generated ciphertext block and a plaintext block used to generate the previously generated ciphertext block.

According to another aspect of the present embodiments, a data decryption method includes decrypting some blocks of encrypted data using an cryptographic key-based block decryption scheme, and decoding remaining blocks of the encrypted data using a non-cryptographic key-based decoding scheme.

The block decryption scheme may include a decryption scheme using a symmetric key or an asymmetric key.

The block decryption scheme may include a white box-based decryption scheme.

The non-cryptographic key-based decoding scheme may include a decoding scheme using at least one among a logical operation, a one-way function, a one-way permutation, and a logical function.

The decoding of the remaining blocks may include generating plaintext blocks of the remaining blocks using an initialization vector or a counter value used to generate the encrypted data.

The decoding of the remaining blocks may include sequentially decoding each of the remaining blocks using a ciphertext block used to generate a previously generated plaintext block.

The decoding of the remaining blocks may include sequentially decoding each of the remaining blocks using a previously generated plaintext block and a ciphertext block used to generate the previously generated plaintext block.

According to another aspect of the present embodiments, there is provided a computer program stored in a recording medium in association with hardware, the computer program causing a computer to execute: dividing data into a plurality of plaintext blocks; encrypting at least one among some blocks of the plurality of plaintext blocks and an initial value for encrypting the data using an cryptographic key-based block encryption scheme; and encoding remaining plaintext blocks using a non-cryptographic key-based encoding scheme.

According to another aspect of the present embodiments, there is provided a computer program stored in a recording medium in association with hardware, the computer program causing a computer to execute: decrypting some blocks of encrypted data using an cryptographic key-based block decryption scheme; and decoding remaining blocks of the encrypted data using a non-cryptographic key-based decoding scheme.

[Advantageous Effects]

According to embodiments of the present embodiments, some ciphertext blocks are generated using a block encryption scheme and remaining ciphertext blocks are processed using an encoding scheme to generate encrypted data, thereby reducing the amount of calculation for data encryption. Accordingly, a large amount of data can be quickly encrypted.

[Description of Drawings]

FIG. 1 is a block diagram of a data encryption apparatus according to an embodiment of the present embodiments.
FIG. 2 is a block diagram of a data decryption apparatus according to an embodiment of the present embodiments.
FIGS. 3a and 3b are diagrams illustrating an electronic code book (ECB) mode according to an embodiment of the present embodiments.
FIGS. 4a and 4b are diagrams illustrating a cipher block chaining (CBC) mode according to an embodiment of the present embodiments.
FIGS. 5a and 5b are diagrams illustrating a CBC mode according to another embodiment of the present embodiments.
FIGS. 6a and 6b are diagrams illustrating a CBC mode according to another embodiment of the present embodiments.
FIGS. 7a and 7b are diagrams illustrating a propagating cipher block chaining (PCBC) mode according to an embodiment of the present embodiments.
FIGS. 8a and 8b are diagrams illustrating a PCBC mode according to another embodiment of the present embodiments.
FIGS. 9a and 9b are diagrams illustrating a PCBC mode according to another embodiment of the present embodiments.
FIGS. 10a and 10b are diagrams illustrating a cipher feedback (CFB) mode according to an embodiment of the present embodiments.
FIGS. 11a and 11b are diagrams illustrating a CFB mode according to another embodiment of the present embodiments.
FIGS. 12a and 12b are diagrams illustrating a CFB mode according to another embodiment of the present embodiments.
FIGS. 13a and 13b are diagrams illustrating an output feedback (OPB) mode according to an embodiment of the present embodiments.
FIGS. 14a and 14b are diagrams illustrating an OFB mode according to another embodiment of the present embodiments.
FIGS. 15a and 15b are diagrams illustrating a counter (CTR) mode according to an embodiment of the present embodiments.
FIGS. 16a and 16b are diagrams illustrating a CTR mode according to another embodiment of the present embodiments.
FIGS. 17a and 17b are diagrams illustrating a CTR mode according to another embodiment of the present embodiments.
FIG. 18 is a flowchart of a data encryption method according to an embodiment of the present embodiments.
FIG. 19 is a flowchart of a data decryption method according to an embodiment of the present embodiments.

[Modes of the Embodiments]

Hereinafter, exemplary embodiments of the present embodiments will be described with reference to the accompanying drawings. The following descriptions are provided to assist comprehensive understanding of methods, apparatuses, and/or systems described herein. However, the following descriptions are merely examples, and the present embodiments is not limited thereto.
In describing embodiments of the present embodiments, well-known techniques related to the present embodiments are not described in detail if it is determined that they would obscure the embodiments due to unnecessary detail. Terms used herein have been defined in consideration of functions of the present embodiments, and may vary according to an intention of a user or an operator, a precedent, or the like. Accordingly, it will be understood that the terms should be interpreted as having a meaning that is consistent with their meaning in the context of the specification. The terms used in the detailed description are for the purpose of describing embodiments of the present embodiments only and is not intended to be limiting of the present embodiments. As used herein, the singular forms are intended to include the plural forms as well, unless the context clearly indicates otherwise. It will be further understood that the terms "comprise," "comprising," "include" and/or "including," when used herein, specify the presence of stated features, integers, steps, operations, elements, and/or groups thereof, but do not preclude the presence or addition of one or more other features, integers, steps, operations, elements, and/or groups thereof.

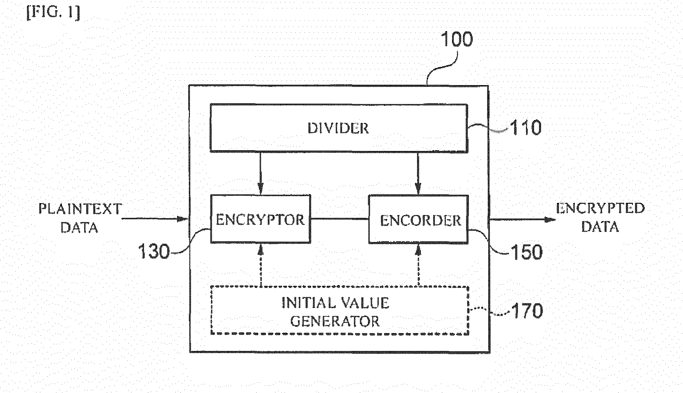

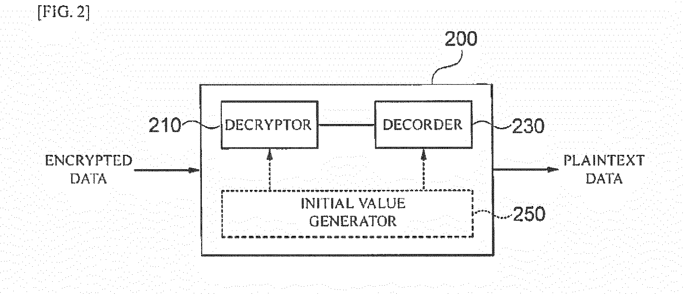

FIG. 1 is a diagram illustrating a data encryption apparatus according to an exemplary embodiment. FIG. 2 is a diagram illustrating a data decryption apparatus according to an exemplary embodiment. In some embodiments, a data encryption apparatus 100 and a data decryption apparatus 200 which are examples may be implemented or included in different computing apparatuses. Each of the computing apparatuses may include one or more processors, and a computer-readable storage medium such as a memory accessible by the one or more processors. The computer-readable storage medium may be located inside or outside the processor and connected to the processor using various well-known means. The computer-readable storage medium may store a computer-executable command. The processor may execute a command stored in the computer-readable storage medium. When the command is executed by the processor, the computing apparatus may perform an operation according to an exemplary embodiment.

FIG. 1 is a block diagram of the data encryption apparatus 100 according to an embodiment of the present embodiments.

Referring to FIG. 1, the data encryption apparatus 100 according to an embodiment of the present embodiments includes a divider 110, an encryptor 130, and an encoder 150.

The data encryption apparatus 100 is configured to generate encrypted data (for example, digital ciphertext) by encrypting plaintext data (for example, digital plaintext).

The divider 110 divides plaintext data to be encrypted into a plurality of plaintext blocks. For example, the divider 110 may generate a plurality of plaintext blocks by dividing the plaintext data in units of blocks having a certain size. In this case, for example, a padding process of padding a predefined value in the last block may be performed to equalize the sizes of the plurality of plaintext blocks.

The encryptor 130 encrypts at least one among some of the plurality of plaintext blocks and an initial value for encryption using an cryptographic key-based block encryption scheme.

The cryptographic key-based block encryption scheme may include various types of encryption schemes for encrypting data in units of blocks using a symmetric key or an asymmetric key. For example, the encryptor 130 may generate a ciphertext block using a well-known block encryption algorithm using a symmetric key or an asymmetric key, such as an advanced encryption standard (AES), a data encryption standard (DES), 3DES, Blowfish, an international data encryption algorithm (IDEA), RC2, RC5, RC6, SEED, ARIA, Rivest Shamir Adleman (RSA), a digital signature algorithm (DSA), an elliptic curve cryptosystem (ECC), Elgamal, a white box-based encryption algorithm, etc.

The initial value may include, for example, an initialization vector (IV) that is an arbitrary bit string or a counter value that increases by 1 each time a plaintext block is encrypted. In this case, the encryptor 130 may generate ciphertext blocks by encrypting the initial value (for example, an initialization vector or an initial counter value) using the cryptographic key-based block encryption scheme according to a mode of operation which is to be described below, or by encrypting some of the plurality of plaintext blocks using the initial value (for example, an initialization vector or an initial counter value) according to the cryptographic key-based block encryption scheme.

The encoder 150 encodes the other plaintext blocks, which have not been encrypted by the encryptor 130, using a non-cryptographic key-based encoding scheme.

In one embodiment, the non-cryptographic key-based encoding scheme may include various types of encoding schemes that may hide data without using an cryptographic key. For example, the non-cryptographic key-based encoding scheme may include an encoding scheme using at least one among a logical operation, a one-way function, a one-way permutation, and a logical function consisting of a plurality of logical operations.

According to an embodiment of the present embodiments, the encoder 150 may generate ciphertext blocks by encoding plaintext blocks, which have not been encrypted by the encryptor 130, using the initial value (for example, an initialization value or a counter value) according to a mode of operation which is to be described below.

According to an embodiment of the present embodiments, the encoder 150 may generate ciphertext blocks by sequentially encoding the plaintext blocks, which have not been encrypted by the encryptor 130, according to an operation mode that is to be described below, using either a ciphertext block generated in a previous operation or the ciphertext block generated in the previous operation and a plaintext block used to generate the ciphertext block.

According to an embodiment of the present embodiments, the encryptor 130 and the encoder 150 may encrypt plaintext data using a method similar to a conventional mode of operation for block encryption. For example, the encryptor 130 and the encoder 150 may encrypt plaintext data using one mode of operation among an electronic code book (ECB) mode, a cipher block chaining (CBC) mode, a propagating cipher block chaining (PCBC) mode, a cipher feedback (CFB) mode, an output feedback (OFB), and a counter (CTR) mode. However, one encryption algorithm is applied to encrypting plaintext data in the conventional mode of operation used for a block encryption algorithm, whereas a block encryption scheme and an encoding scheme are applied to encrypting plaintext data in the mode of operation according to an embodiment of the present embodiments. That is, data encrypted according to an embodiment of the present embodiments includes ciphertext blocks generated using the cryptographic key-based block encryption scheme and ciphertext blocks generated using the non-cryptographic key-based encoding scheme. A specific operation according to a mode of operation will be described in detail below.

According to an embodiment of the present embodiments, the data encryption apparatus 100 may further include an initial value generator 170 configured to generate the initial value when encrypted data is generated according to a mode of operation using an initial value (for example, an initialization vector or a counter value).

The divider 110, the encryptor 130, the encoder 150, and the initial value generator 170 are classified according to functions performed in the data encryption apparatus 100. In the embodiment of FIG. 1, the divider 110, the encryptor 130, the encoder 150, and the initial value generator 170 are illustrated as separate components but embodiments are not limited thereto. The divider 110, the encryptor 130, the encoder 150, and the initial value generator 170 may not be clearly classified according to specific operations.

In the above-described example, the encryptor 130 performs encryption using a well-known specific encryption algorithm but embodiments are not limited thereto. For example, on the basis of a predetermined operation mode, the encryptor 130 and the encoder 150 may encrypt plaintext data using an encryption algorithm designed to encrypt some of plaintext data using a symmetric key or an asymmetric key according to a block encryption scheme and encode the remaining plaintext data according to a certain encoding scheme that does not use an cryptographic key.

In one embodiment, the divider 110, the encryptor 130, the encoder 150, and the initial value generator 170 may be implemented in a computing apparatus including one or more processors and a computer-readable recording medium connected to the processor. The computer-readable recording medium may be located inside or outside the processor, and connected to the processor using various well-known means. The processor located in the computing apparatus may control the computing apparatus to operate according to an exemplary embodiment described herein. For example, the processor may execute a command stored in the computer-readable recording medium, and the command stored in the computer-readable recording medium may be configured, when executed by the processor, to cause the computing apparatus to perform operations according to an exemplary embodiment described herein.

FIG. 2 is a block diagram of the data decryption apparatus 200 according to an embodiment of the present embodiments.

The data decryption apparatus 200 of FIG. 2 is configured to generate plaintext data by decrypting data encrypted by the data encryption apparatus 100 of FIG. 1.

Referring to FIG. 2, the data decryption apparatus 200 according to an embodiment of the present embodiments includes a decryptor 210 and a decoder 230.

The decryptor 210 may decrypt some blocks of encrypted data using an cryptographic key-based block decryption scheme. For example, as described above with reference to FIG. 1, data encrypted by the data encryption apparatus 100 may include a ciphertext block encrypted using the cryptographic key-based block encryption scheme and a ciphertext block encoded using the non-cryptographic key-based encoding scheme. Thus, according to an embodiment of the present embodiments, the decryptor 210 may decrypt a ciphertext block of encrypted data, which was encrypted using the cryptographic key-based block encryption scheme, using the encryption-based block decryption scheme.

The encryption-based block decryption scheme may include various types of decryption methods of decrypting data in units of blocks using a symmetric key or an asymmetric key. For example, the decryptor 210 may decrypt some of the ciphertext blocks using a well-known block decryption algorithm using a symmetric key or an asymmetric key, such as the AES, the DES, the 3DES, Blowfish, the IDEA, RC2, RC5, RC6, SEED, ARIA, RSA, the DSA, the ECC, ELGmal, the white box-based decryption algorithm, etc.

The decoder 230 may decode ciphertext blocks of encrypted data that have not been decrypted by the decryptor 210 using a non-cryptographic key-based decoding scheme. The non-cryptographic key-based decoding scheme may include a decoding scheme employing at least one among a logical operation, a one-way function, a one-way permutation, and a logical function.

According to an embodiment of the present embodiments, the decoder 230 may generate plaintext blocks by decoding ciphertext blocks, which have not been decrypted by the decryptor 210, using an initial value or a counter value according to a mode of operation mode for decrypting encrypted data.

According to an embodiment of the present embodiments, the decoder 230 may generate plaintext blocks by sequentially decoding ciphertext blocks, which have not been decrypted by the decryptor 210, according to the mode of operation for decrypting encrypted data using either a ciphertext block used to generate a plaintext block generated in a previous operation or the plaintext generated in the previous operation and the ciphertext block used to generate the previous plaintext block.

According to an embodiment of the present embodiments, the decryptor 210 and the decoder 230 may decrypt encrypted data using the same mode of operation as that used by the data encryption apparatus 100 to generate encrypted data. For example, the decryptor 210 and the decoder 230 may decrypt data encrypted using one operation mode among an ECB mode, a CBC mode, a PCBC mode, a CFB mode, an OFB mode, and a CTR mode, as will be described in detail below.

According to an embodiment of the present embodiments, the data decryption apparatus 200 may further include an initial value generator 250 configured to generate an initial value when plaintext data is generated according to a mode of operation using an initial value (for example, an initialization vector or a counter value).

The decryptor 210, the decoder 230, and the initial value generator 250 are classified according to functions performed in the data decryption apparatus 200. In the embodiment of FIG. 2, the decryptor 210, the decoder 230, and the initial value generator 250 are illustrated as separate components. However, embodiments are not limited thereto, and the decryptor 210, the decoder 230, and the initial value generator 250 may not be clearly classified in terms of specific operations.

In the above-described example, the decryptor 210 performs decryption using a well-known specific decryption algorithm but embodiments are not limited thereto. For example, on the basis of a predetermined operation mode, the decryptor 210 and the decoder 230 may generate plaintext data from encrypted data using a decryption algorithm designed to decrypt some of encrypted data using a symmetric key or an asymmetric key according to a block decryption scheme and decode the remaining encrypted data according to a certain decoding scheme that does not use an cryptographic key

In one embodiment, the decryptor 210, the decoder 230, and the initial value generator 250 may be implemented in a computing apparatus including one or more processors and a computer-readable recording medium connected to the processor. The computer-readable recording medium may be located inside or outside the processor, and connected to the processor using various well-known means. The processor located in the computing apparatus may control the computing apparatus to operate according to an exemplary embodiment described herein. For example, the processor may execute a command stored in the computer-readable recording medium, and the command stored in the computer-readable recording medium may be configured, when executed by the processor, to cause the computing apparatus to perform operations according to an exemplary embodiment described herein.

Examples of operations of the data encryption apparatus 100 and the data decryption apparatus 200 according to each mode of operation will be described in more detail below. In the following embodiments, it will be described for convenience of explanation that an AES algorithm is used as a block encryption scheme and an exclusive-or (XOR) operation or an XOR operation and a logical function are used as an encoding scheme. However, embodiments are not limited thereto.

Furthermore, in the following embodiments, it will be described that a block encryption scheme is used to generate first ciphertext. However, embodiments are not limited thereto, and two or more plaintext blocks may be encrypted using the block encryption scheme in consideration of encryption speed, etc.

1. Example using ECB mode

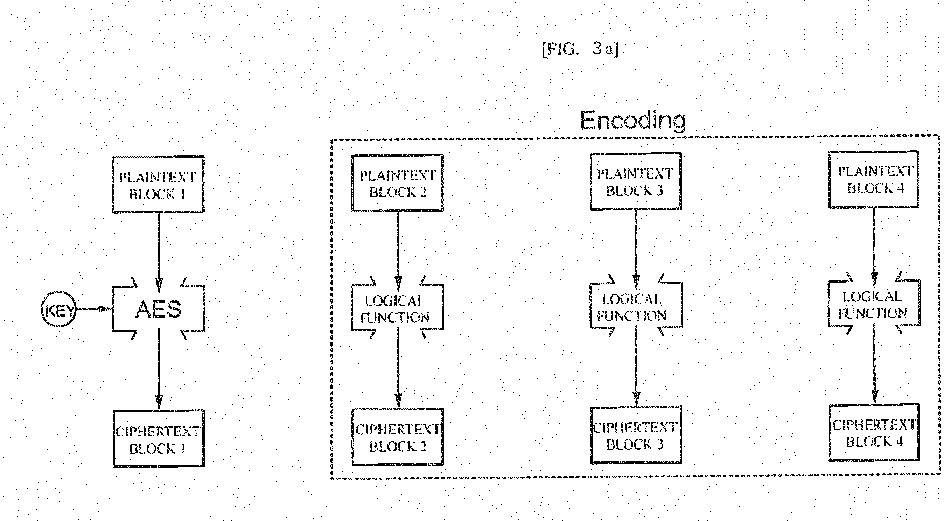

According to an embodiment of the present embodiments, as illustrated in FIG. 3a, the data encryption apparatus 100 may encrypt data using the ECB mode.

As illustrated in FIG. 3a, the encryptor 130 generates a ciphertext block 1 by applying a block encryption algorithm to a plaintext block 1 that is a first plaintext block among a plurality of plaintext blocks. Then, the encoder 150 may generate a ciphertext block 2, a ciphertext block 3, and a ciphertext block 4 by applying a logical function to a plaintext block 2, a plaintext block 3, and a plaintext block 4.

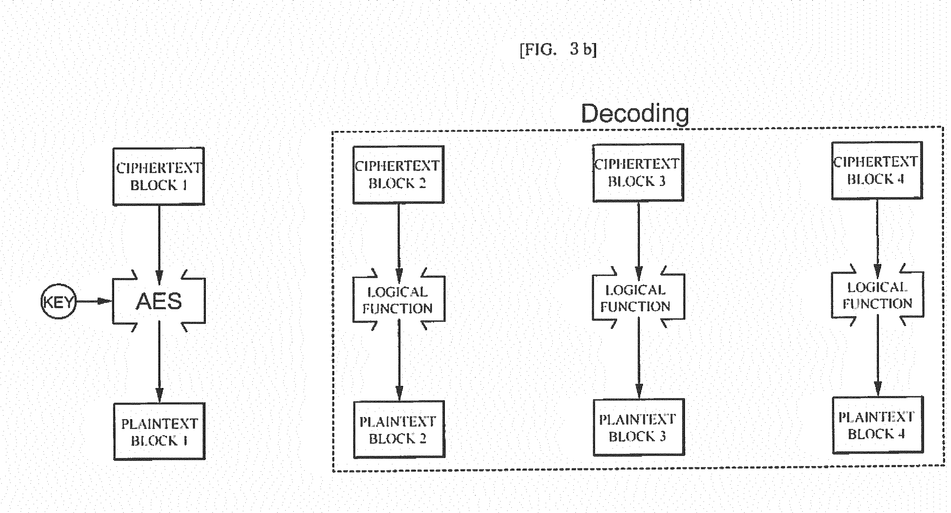

As illustrated in FIG. 3b, the data decryption apparatus 200 may perform a decryption operation on data encrypted as illustrated in FIG. 3a.

Referring to FIG. 3b, the decryptor 210 generates the plaintext block 1 by applying the block encryption algorithm to the ciphertext block 1 that is a first ciphertext block among a plurality of ciphertext blocks. Thereafter, the decoder 230 may generate the plaintext block 2, the plaintext block 3, and the plaintext block 4 by applying a logical function to the ciphertext block 2, the ciphertext block 3, and the ciphertext block 4.

2. Example using CBC mode

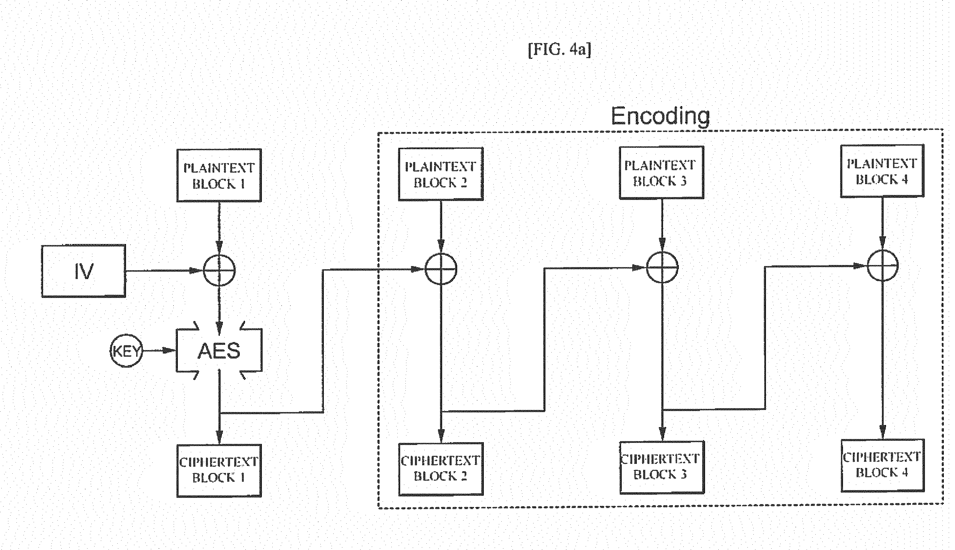

According to an embodiment of the present embodiments, as illustrated in FIG. 4a, the data encryption apparatus 100 may encrypt data using the CBC mode.

Referring to FIG. 4a, the encryptor 130 may generate a first ciphertext block (a ciphertext block 1) by performing an XOR operation on a first plaintext block (a plaintext block 1) and an initialization vector IV and applying the AES algorithm to a result of performing the XOR operation.

Then, the encoder 150 may generate ciphertext blocks 2 to 4 by performing the XOR operation on each of plaintext blocks 2 to 4 and a ciphertext block generated right before each of the ciphertext blocks 2 to 4 is generated.

In detail, the encryption operation illustrated in FIG. 4a may be expressed by Equation 1 below.

[Equation 1]

$$C_i = E^{BLOCK}(P_i \text{ XOR IV})$$

$$C_i = P_i \text{ XOR } C_{i-1} \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, and XOR represents the XOR operation performed on each of the blocks (for example, a bitwise XOR operation when each of the blocks is a bit sequence).

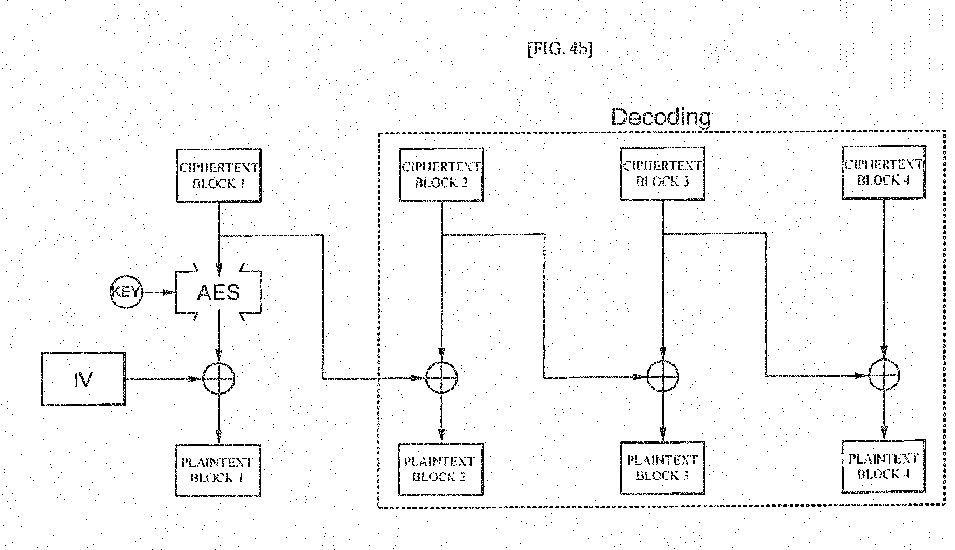

As illustrated in FIG. 4b, the data decryption apparatus 200 may perform a decryption operation on the data encrypted as illustrated in FIG. 4a.

Referring to FIG. 4b, the decryptor 210 may generate the first plaintext block (the plaintext block 1) by decrypting a first block of the encrypted data (the ciphertext block 1) using the AES algorithm and performing the XOR operation on the decrypted ciphertext block 1 and the initialization vector.

Then, the decoder 230 may generate the plaintext blocks 2 to 4 by performing the XOR operation on each of the ciphertext blocks 2 to 4 and the ciphertext block generated right before each of the ciphertext blocks 2 to 4 is generated.

In detail, the decryption operation illustrated in FIG. 4b may be expressed by Equation 2 below.

[Equation 2]

$$P_i = D^{BLOCK}(C_i) \text{ XOR IV}$$

$$P_i = C_i \text{ XOR } C_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, XOR represents an XOR operation performed between blocks (for example, a bitwise XOR operation when each of the blocks is a bit sequence).

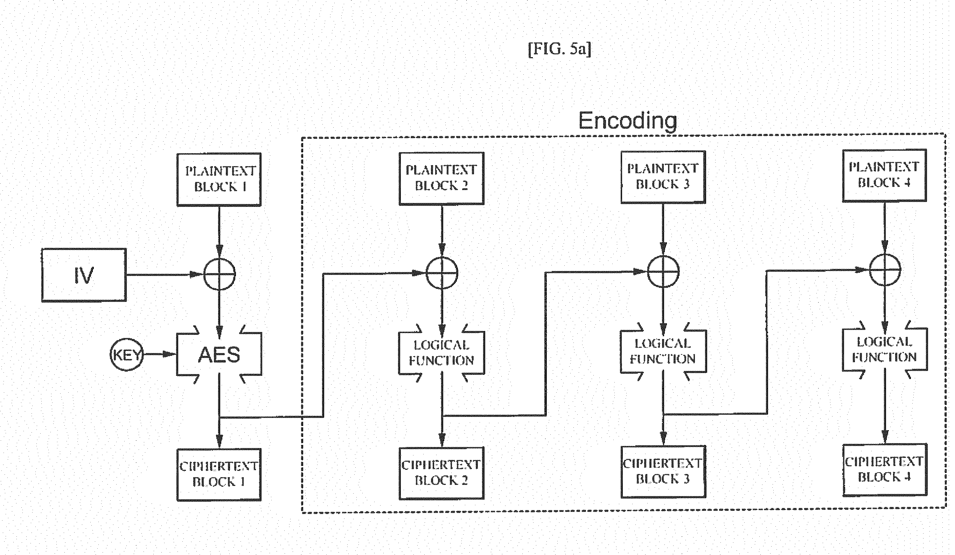

According to another embodiment of the present embodiments, the data encryption apparatus 100 may encrypt data using the CBC mode as illustrated in FIG. 5a.

Referring to FIG. 5a, the encryptor 130 may generate a first ciphertext block (a ciphertext block 1) by performing the XOR operation on a first plaintext block (a plaintext block 1) and an initialization vector and applying the AES algorithm to a result of performing the XOR operation.

Then, the encoder 150 may generate ciphertext blocks 2 to 4 by performing the XOR operation on each of plaintext blocks 2 to 4 and a ciphertext block generated right before each of the ciphertext blocks 2 to 4 is generated, and applying a logical function to a result of performing the XOR operation.

In detail, the encryption operation illustrated in FIG. 5a may be expressed by Equation 3 below.

[Equation 3]

$$C_i = E^{BLOCK}(P_i \text{ XOR IV})$$

$$C_i = F(P_i \text{ XOR } C_{i-1}) \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, F represents a logical function and XOR represents an XOR operation performed between blocks (for example, a bitwise XOR operation when each of the blocks is a bit sequence).

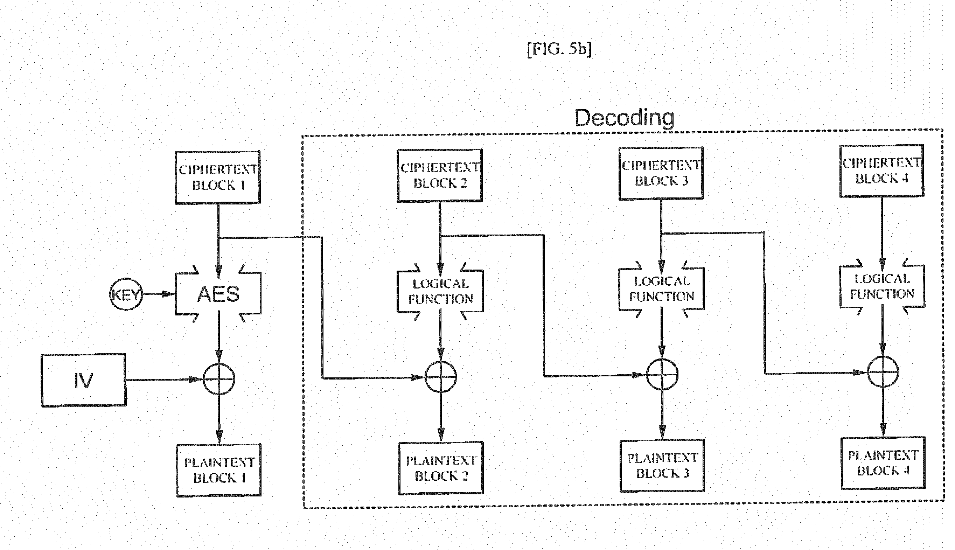

As illustrated in FIG. 5b, the data decryption apparatus 200 may perform a decryption operation on the data encrypted as illustrated in FIG. 5a.

Referring to FIG. 5b, the decryptor 210 may generate the first plaintext block (the plaintext block 1) by decrypting a first block of the encrypted data (the ciphertext block 1) using the AES algorithm, and performing the XOR operation on the decrypted ciphertext block 1 and the initialization vector.

Then, the decoder 230 may generate the plaintext blocks 2 to 4 by applying a logical function to each of the ciphertext blocks 2 to 4, and performing the XOR operation on a result of applying the logical function to each of the ciphertext blocks 2 to 4 and the ciphertext block generated right before each of the ciphertext blocks 2 to 4 is generated.

In detail, the decryption operation illustrated in FIG. 5b may be expressed by Equation 4 below.

[Equation 4]

$$P_1 = D^{BLOCK}(C_1) \text{ XOR IV}$$

$$P_i = F(C_i) \text{ XOR } C_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, F represents a logical function, and XOR represents an XOR operation performed between blocks (for example, a bitwise XOR operation when each of the blocks is a bit sequence).

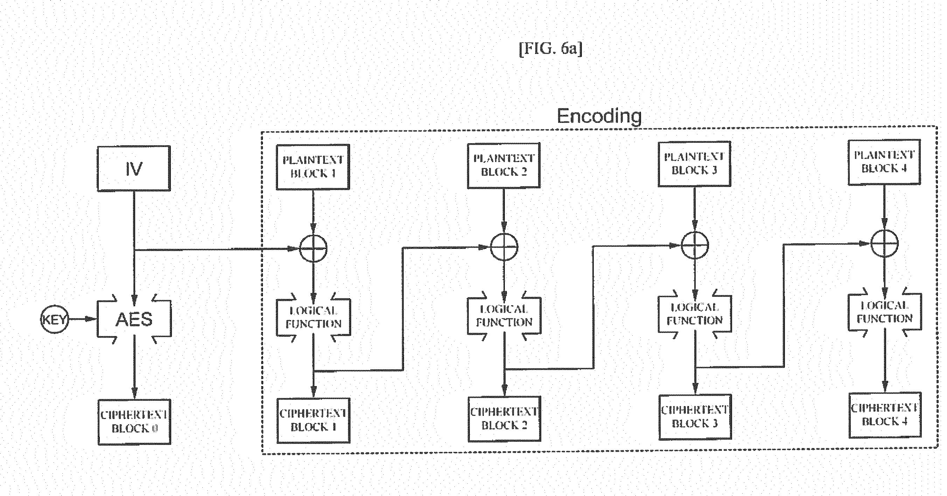

According to another embodiment of the present embodiments, the data encryption apparatus 100 may encrypt data using the CBC mode as illustrated in FIG. 6a.

Referring to FIG. 6a, the encryptor 130 may generate a first ciphertext block (a ciphertext block 0) by applying the AES algorithm to an initialization vector IV.

Then, the encoder 150 may generate a ciphertext block 1 by performing the XOR operation on a plaintext block 1 and the initialization vector IV, and applying a logical function to a result of performing the XOR operation.

Then, the encoder 150 may generate ciphertext blocks 2 to 4 by performing the XOR operation on each of plaintext blocks 2 to 4 and a ciphertext block generated right before each of the ciphertext blocks 2 to 4 is generated, and applying a logical function to a result of performing the XOR operation.

In detail, the encryption operation illustrated in FIG. 6a may be expressed by Equation 5 below.

[Equation 5]

$$C_0 = E^{BLOCK}(IV)$$

$$C_1 = F(P_1 \text{ XOR IV})$$

$$C_i = F(P_i \text{ XOR } C_{i-1}) \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

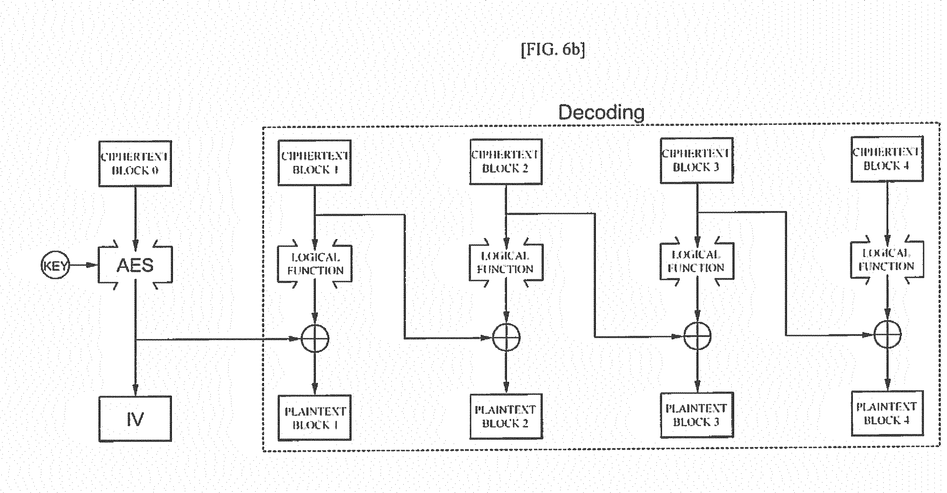

As illustrated in FIG. 6b, the data decryption apparatus 200 may perform a decryption operation on the data encrypted as illustrated in FIG. 6a.

Referring to FIG. 6b, the decryptor 210 may generate the initialization vector IV by decrypting a first block of the encrypted data (the ciphertext block 0) using the AES algorithm.

Then, the decoder 230 may generate the first plaintext block by applying a logical function to the ciphertext block 1, and then, performing the XOR operation on a result of applying the logical function to the ciphertext block 1 and the initialization vector IV.

Then, the decoder 230 may generate the plaintext blocks 2 to 4 by applying a logical function to each of the ciphertext blocks 2 to 4, and then, performing the XOR operation on a result of applying the logical function to each of the ciphertext blocks 2 to 4 and the ciphertext block generated right before each of the ciphertext blocks 2 to 4 is generated.

In detail, the decryption operation illustrated in FIG. 6b may be expressed by Equation 6 below.

[Equation 6]

$$IV = D^{BLOCK}(C_0)$$

$$P_1 = F(C_1) \text{ XOR } IV$$

$$P_i = F(C_i) \text{ XOR } C_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, F represents a logical function, and XOR represents an XOR operation performed between blocks (for example, a bitwise XOR operation when each of the blocks is a bit sequence).

3. Example using PCBC mode

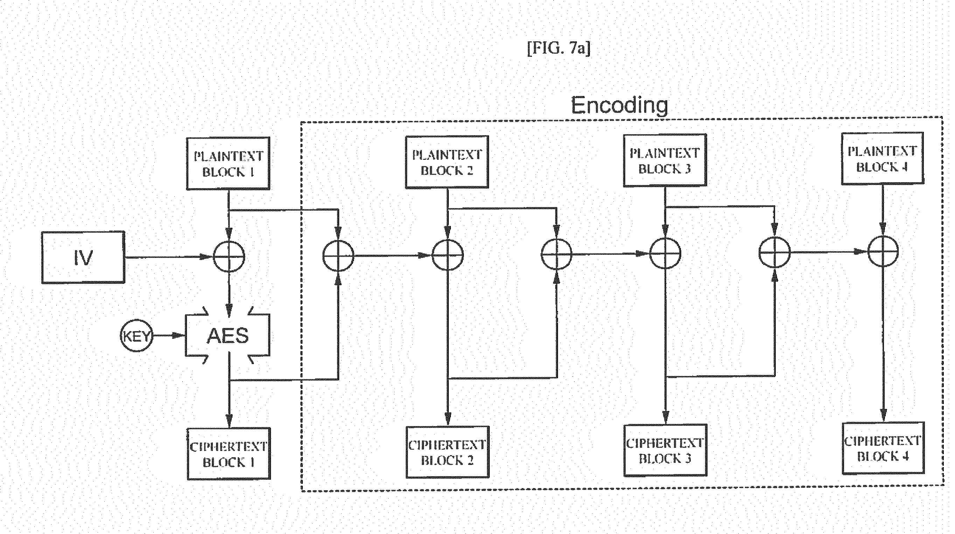

According to an embodiment of the present embodiments, as illustrated in FIG. 7a, the data encryption apparatus 100 may encrypt data using the PCBC mode.

Referring to FIG. 7a, the encryptor 130 may generate a first ciphertext block (a ciphertext block 1) by performing the XOR operation on a first plaintext block of the data (a plaintext block 1) and an initialization vector IV and applying the AES algorithm to a result of performing the XOR operation.

Then, the encoder 150 may generate ciphertext blocks 2 to 4 by performing the XOR operation on each of plaintext blocks 2 to 4 together with a ciphertext block generated and a plaintext block used right before each of the ciphertext blocks 2 to 4 is generated.

In detail, the encryption operation illustrated in FIG. 7a may be expressed by Equation 7 below.

[Equation 7]

$$C_1 = E^{BLOCK}(P_1 \text{ XOR } IV)$$

$$C_i = P_i \text{ XOR } P_{i-1} \text{ XOR } C_{i-1} \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, and XOR represents an XOR operation performed between blocks (for example, a bitwise XOR operation when each of the blocks is a bit sequence).

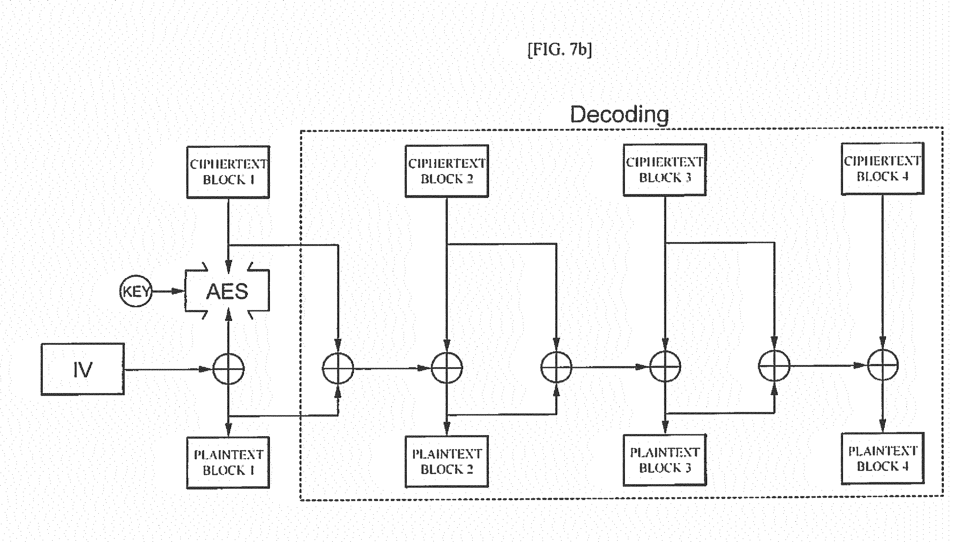

As shown as an example in FIG. 7b, the data decryption apparatus 200 may perform a decryption operation on the data encrypted according to the example illustrated in FIG. 7a.

Referring to FIG. 7b, the decryptor 210 may generate the first plaintext block (the plaintext block 1) by decrypting a first block of the encrypted data (the ciphertext block 1) using the AES algorithm, and then, performing the XOR operation on the decrypted ciphertext block 1 and the initialization vector IR.

Then, the decoder 230 may generate the plaintext blocks 2 to 4 by performing the XOR operation on each of the ciphertext blocks 2 to 4 together with the plaintext block generated and the ciphertext block used right before each of the plaintext blocks 2 to 4 is generated.

In detail, the decryption operation illustrated in FIG. 7b may be expressed by Equation 8 below.

[Equation 8]

$$P_1 = D^{BLOCK}(C_1) \text{ XOR } IV$$

$$P_i = C_i \text{ XOR } C_{i-1} \text{ XOR } P_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, and XOR represents an XOR operation performed between blocks (for example, a bitwise XOR operation when each of the blocks is a bit sequence).

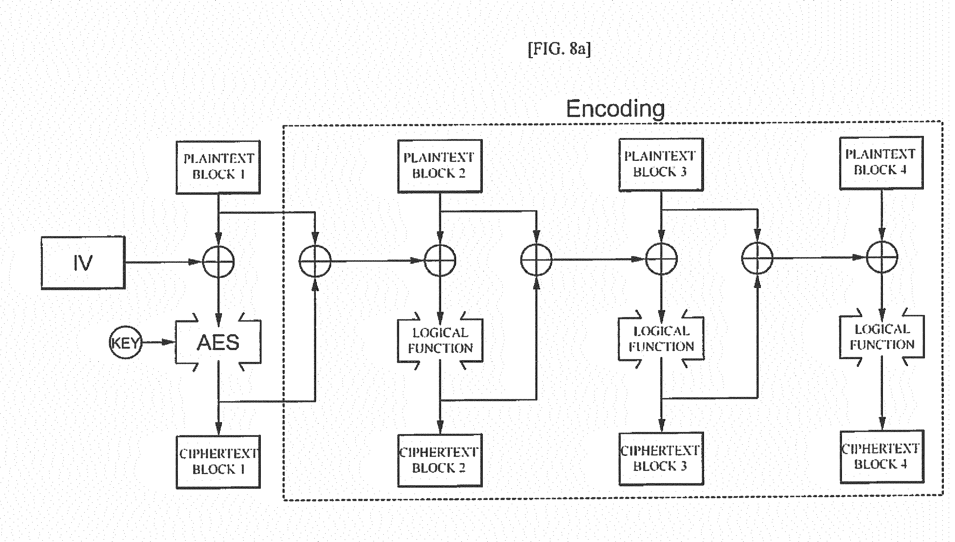

According to another embodiment of the present embodiments, the data encryption apparatus 100 may encrypt data using the PCBC mode as illustrated in FIG. 8a.

Referring to FIG. 8a, the encryptor 130 may generate a first ciphertext block (a ciphertext block 1) by performing the XOR operation on a first plaintext block of the data (a plaintext block 1) and an initialization vector IV and applying the AES algorithm to a result of performing the XOR operation.

Then, the encoder 150 may generate ciphertext blocks 2 to 4 by performing the XOR operation on each of plaintext blocks 2 to 4 together with the ciphertext block generated and the plaintext block used right before each of the ciphertext blocks 2 to 4 is generated, and then, applying a logical function to a result of performing the XOR operation.

In detail, the encryption operation illustrated in FIG. 8a may be expressed by Equation 9 below.

[Equation 9]

$$C_1 = E^{BLOCK}(P_1 \text{ XOR } IV)$$

$$C_i = F(P_i \text{ XOR } P_{i-1} \text{ XOR } C_{i-1}) \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

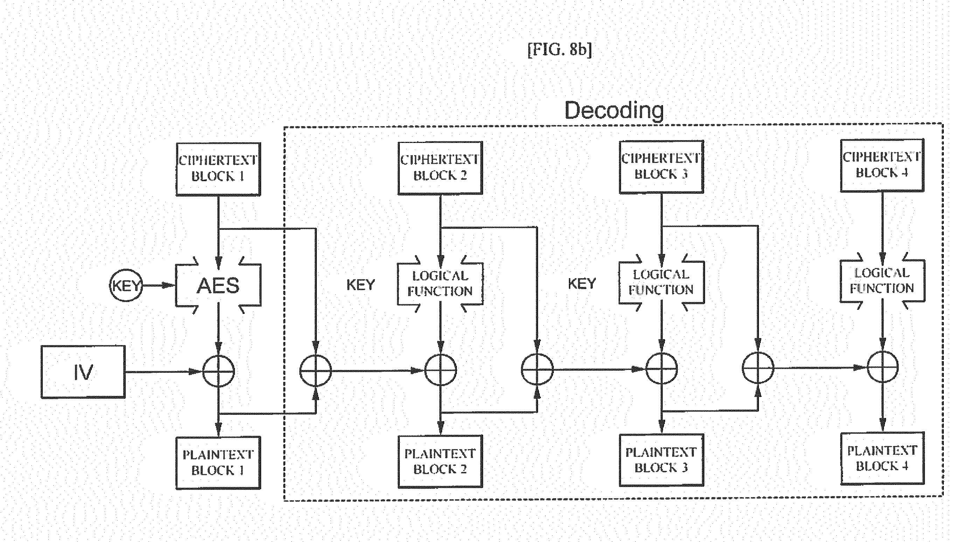

As illustrated in FIG. 8b, the data decryption apparatus 200 may perform a decryption operation on the data encrypted as illustrated in FIG. 8a.

Referring to FIG. 8b, the decryptor 210 may generate the first plaintext block (the plaintext block 1) by decrypting a first block of the encrypted data (the ciphertext block 1) using the AES algorithm, and then, performing the XOR operation on the decrypted ciphertext block 1 and the initialization vector IR.

Then, the decoder 230 may generate the plaintext blocks 2 to 4 by applying a logical function to each of the ciphertext blocks 2 to 4, and then, performing the XOR operation on a result of applying the logical function to each of the ciphertext blocks 2 to 4, together with the plaintext block generated and the ciphertext block used right before each of the plaintext blocks 2 to 4 is generated.

In detail, the decryption operation illustrated in FIG. 8b may be expressed by Equation 10 below.

[Equation 10]

$$P_1 = D^{BLOCK}(C_1) \text{ XOR } IV$$

$$P_i = F(C_i) \text{ XOR } C_{i-1} \text{ XOR } P_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, F represents a logical function, and XOR represents an XOR operation performed between blocks (for example, a bitwise XOR operation when each of the blocks is a bit sequence).

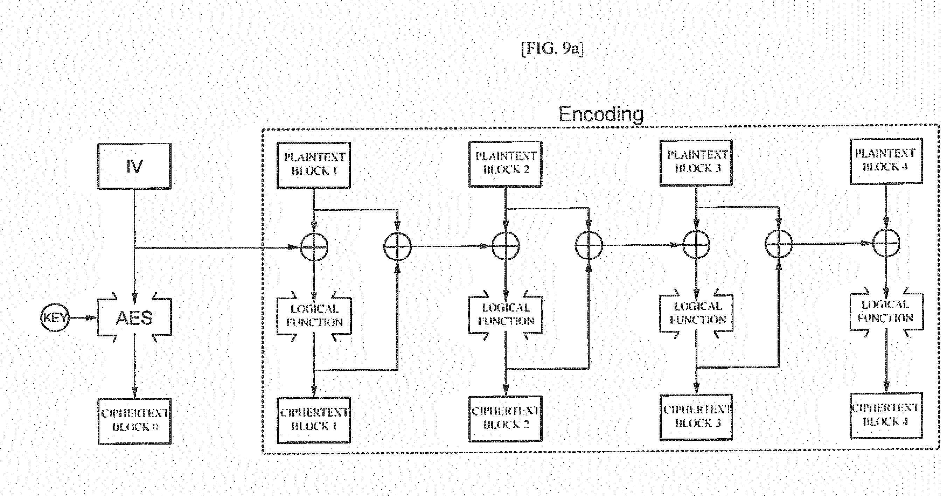

According to another embodiment of the present embodiments, the data encryption apparatus 100 may encrypt data using the PCBC mode as shown as an example in FIG. 9a.

Referring to FIG. 9a, the encryptor 130 may generate a first ciphertext block (a ciphertext block 0) by performing an XOR operation on a first plaintext block of the data (a plaintext block 1) with an initialization vector IV and applying the AES algorithm to a result of performing the XOR operation.

Then, the encoder 150 may generate a ciphertext block 1 by performing the XOR operation on the plaintext block 1 and the initialization vector IV, and then, applying a logical function to a result of performing the XOR operation.

Thereafter, the encoder 150 may generate ciphertext blocks 2 to 4 by performing the XOR operation on each of plaintext blocks 2 to 4 together with the ciphertext block generated and the plaintext block used right before each of the ciphertext blocks 2 to 4 is generated, and then, applying a logical function to a result of performing the XOR operation.

In detail, the encryption operation illustrated in FIG. 9a may be expressed by Equation 11 below.

[Equation 11]

$$C_0 = E^{BLOCK}(IV)$$

$$C_1 = F(P_1 \text{ XOR } IV)$$

$$C_i = F(P_i \text{ XOR } P_{i-1} \text{ XOR } C_{i-1}) \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

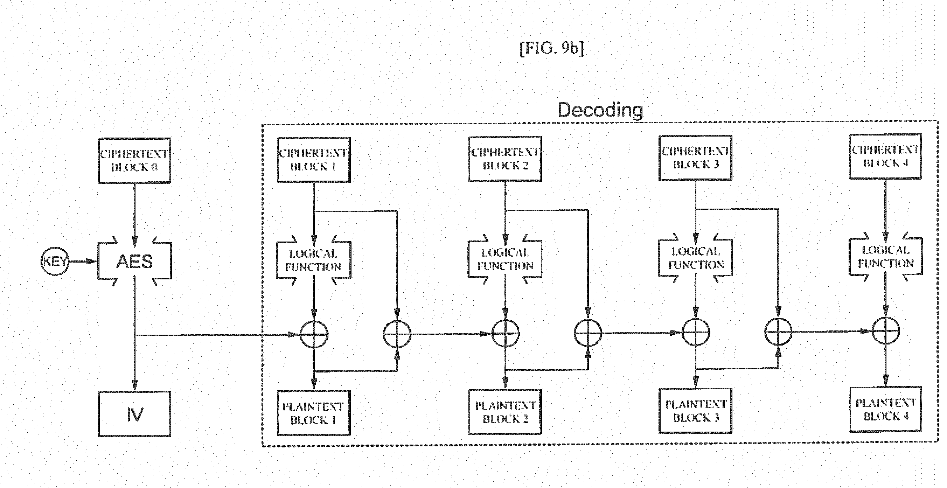

As illustrated in FIG. 9b, the data decryption apparatus 200 may perform a decryption operation on the data encrypted as illustrated in FIG. 9a.

Referring to FIG. 9b, the decryptor 210 may generate the initialization vector IV by decrypting a first block of the encrypted data (the ciphertext block 0) using the AES algorithm.

Then, the decoder 230 may generate the first plaintext block (the plaintext block 1) by applying a logical function to the ciphertext block 1, and then, performing the XOR operation on a result of performing the logical function and the initialization vector IV.

Thereafter, the decoder 230 may generate the plaintext blocks 2 to 4 by applying a logical function to each of the ciphertext blocks 2 to 4, and then, performing the XOR operation on a result of applying the logical function to each of the ciphertext blocks 2 to 4, with the plaintext block generated and the ciphertext block used right before each of the plaintext blocks 2 to 4 is generated.

In detail, the decryption operation illustrated in FIG. 9b may be expressed by Equation 12 below.

[Equation 12]

$$IV = D^{BLOCK}(C_0)$$

$$P_1 = F(C_1) \text{ XOR } IV$$

$$P_i = F(C_i) \text{ XOR } C_{i-1} \text{ XOR } P_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, F represents a logical function, and XOR represents an XOR operation performed between blocks (for example, a bitwise XOR operation when each of the blocks is a bit sequence).

4. Example using CFB mode

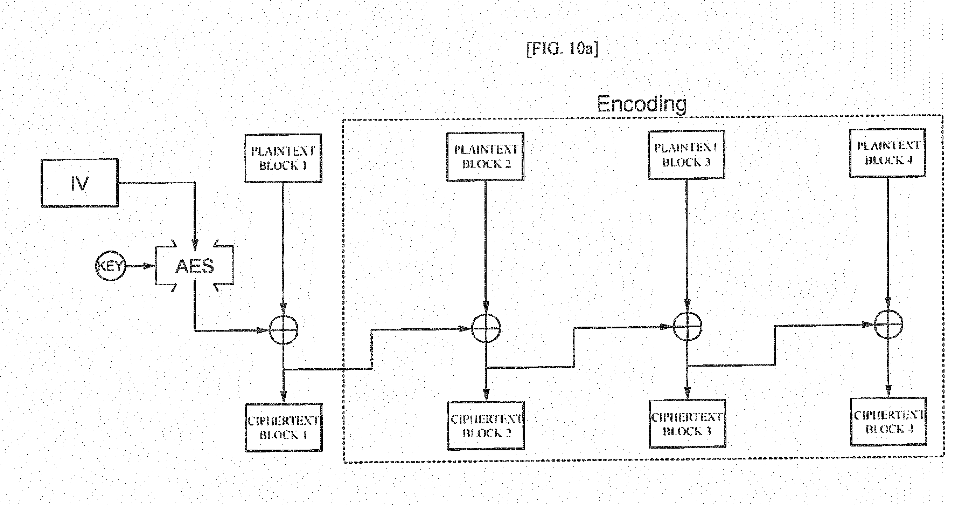

According to an embodiment of the present embodiments, as illustrated in FIG. 10a, the data encryption apparatus 100 may encrypt data using the CFB mode.

Referring to FIG. 10a, the encryptor 130 may generate a first ciphertext block (a ciphertext block 1) by applying the AES algorithm to an initialization vector IV, and then performing the XOR operation on a result of applying the AES algorithm to the initialization vector IV and a first plaintext block (a plaintext block 1).

Then, the encoder 150 may generate ciphertext blocks 2 to 4 by performing the XOR operation on each of plaintext blocks 2 to 4 and the ciphertext block generated right before each of the ciphertext blocks 2 to 4 is generated.

In detail, the encryption operation illustrated in FIG. 10a may be expressed by Equation 13 below.

[Equation 13]

$$C_1 = E^{BLOCK}(IV) \text{ XOR } P_1$$

$$C_i = P_i \text{ XOR } C_{i-1} \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, and XOR represents an XOR operation performed between blocks (for example, a bitwise XOR operation when each of the blocks is a bit sequence).

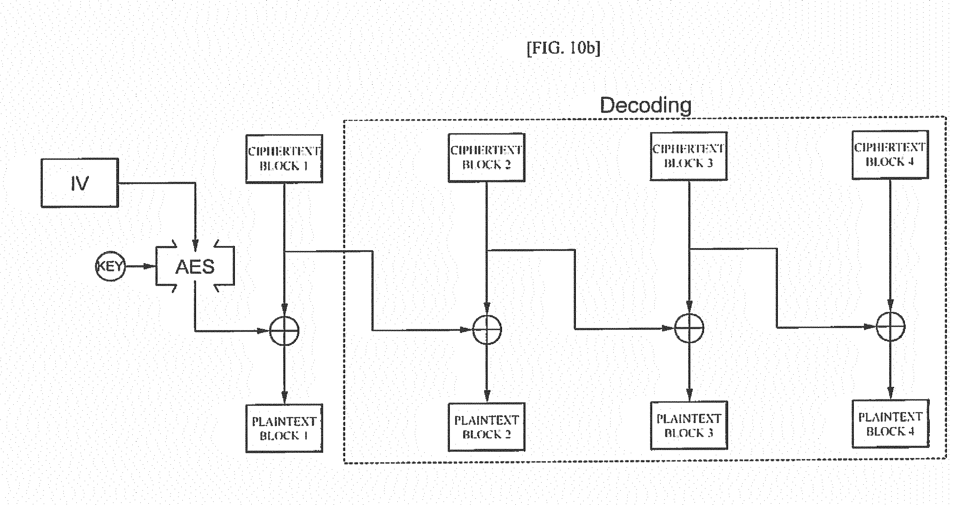

As illustrated in FIG. 10b, the data decryption apparatus 200 may perform a decryption operation on the data encrypted as illustrated in FIG. 10a.

Referring to FIG. 10b, the decryptor 210 may generate the first plaintext block (the plaintext block 1) by applying the AES algorithm to the initialization vector IV, and then, performing the XOR operation on a result of applying the AES algorithm to the initialization vector IV and the first ciphertext block (the ciphertext block 1).

Then, the decoder 230 may generate the plaintext blocks 2 to 4 by performing the XOR operation on each of the ciphertext blocks 2 to 4 and the ciphertext block generated right before each of the ciphertext blocks 2 to 4 is generated.

In detail, the decryption operation illustrated in FIG. 10b may be expressed by Equation 14 below.

[Equation 14]

$$P_1 = D^{BLOCK}(IV) \text{ XOR } C_1$$

$$P_i = C_i \text{ XOR } C_{i-1} \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, and XOR represents an XOR operation performed between blocks (for example, a bitwise XOR operation when each of the blocks is a bit sequence).

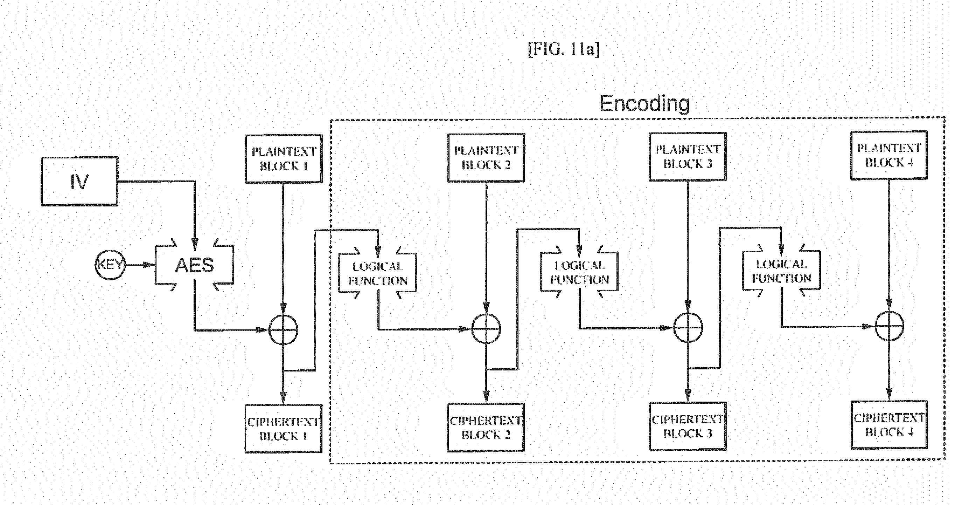

According to another embodiment of the present embodiments, the data encryption apparatus 100 may encrypt data using the CFB mode as illustrated in FIG. 11a.

Referring to FIG. 11a, the encryptor 130 may generate a first ciphertext block (a ciphertext block 1) by applying the AES algorithm to an initialization vector IV, and then, performing the XOR operation on a result of applying the AES algorithm to the initialization vector IV and a first plaintext block (a plaintext block 1).

Then, the encoder 150 may generate ciphertext blocks 2 to 4 by applying a logical function to the ciphertext block generated right before each of the ciphertext blocks 2 to 4 is generated, and then, performing the XOR operation on a result of applying the logical function to the ciphertext block and each of plaintext blocks 2 to 4.

In detail, the encryption operation illustrated in FIG. 11a may be expressed by Equation 15 below.

[Equation 15]

$$C_1 = E^{BLOCK}(IV) \text{ XOR } P_1$$

$$C_i = F(C_{i-1}) \text{ XOR } P_i \ (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, and XOR represents an XOR operation performed between blocks (for example, a bitwise XOR operation when each of the blocks is a bit sequence).

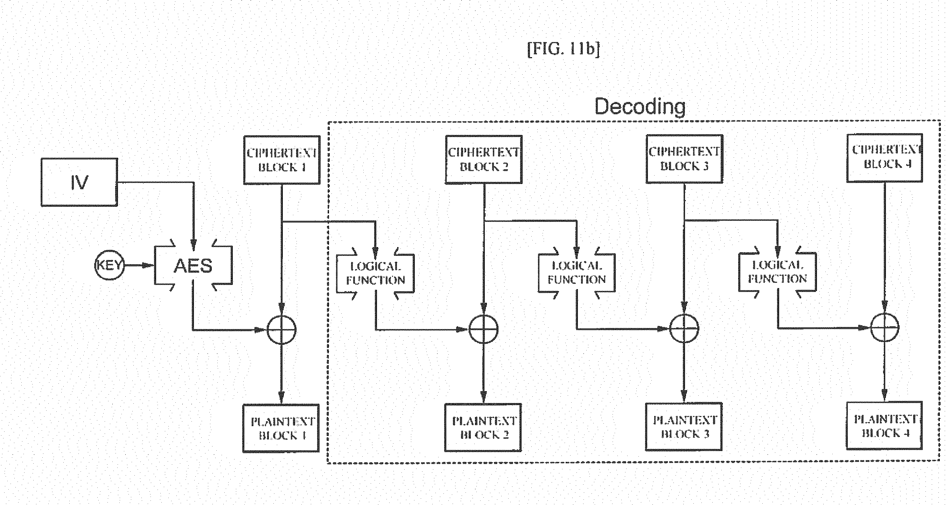

As illustrated in FIG. 11b, the data decryption apparatus 200 may perform a decryption operation on the data encrypted as illustrated in FIG. 11a.

Referring to FIG. 11b, the decryptor 210 may generate the first plaintext block (the plaintext block 1) by applying the AES algorithm to the initialization vector IV, and then, performing the XOR operation on a result of applying AES algorithm to the initialization vector IV and the first ciphertext block (the ciphertext block 1).

Then, the decoder 230 may generate the plaintext blocks 2 to 4 by applying a logical function to the ciphertext block preceding each of the ciphertext blocks 2 to 4, and then, performing the XOR operation on a result of applying the logical function and each of the ciphertext blocks 2 to 4.

In detail, the decryption operation illustrated in FIG. 11b may be expressed by Equation 16 below.

$$[\text{Equation } 16]$$

$$P_1 = D^{BLOCK}(IV) \; XOR \; C_1$$

$$P_i = F(C_{i-1}) \; XOR \; C_i \; (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, and XOR represents an XOR operation performed between blocks (for example, a bitwise XOR operation when each of the blocks is a bit sequence).

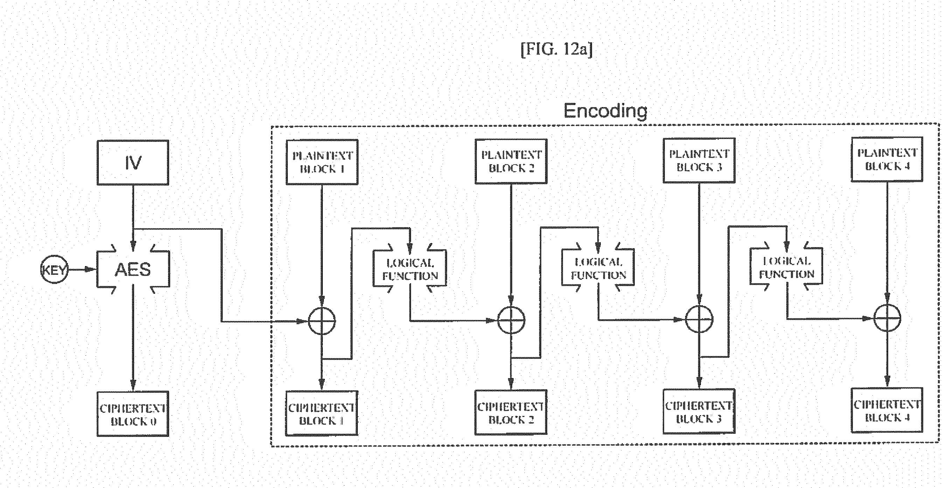

According to another embodiment of the present embodiments, the data encryption apparatus 100 may encrypt data using the CFB mode as illustrated in FIG. 12a.

Referring to FIG. 12a, the encryptor 130 may generate a first ciphertext block (a ciphertext block 0) by applying the AES algorithm to an initialization vector IV.

Then, the encoder 150 may generate a first ciphertext block (a ciphertext block 1) by performing the XOR operation on the initialization vector IV and a first plaintext block (a plaintext block 1)

Thereafter, the encoder 150 may generate ciphertext blocks 2 to 4 by applying a logical function to the ciphertext block generated right before each of the ciphertext blocks 2 to 4 is generated, and then, performing the XOR operation on a result of applying the logical function and each of the plaintext blocks 2 to 4.

In detail, the encryption operation illustrated in FIG. 12a may be expressed by Equation 17 below.

$$[\text{Equation } 17]$$

$$C_0 = E^{BLOCK}(IV)$$

$$C_1 = IV \; XOR \; P_1$$

$$C_i = F(C_{i-1}) \; XOR \; P_i \; (i \geq 2),$$

where $C_i$ represents an $i^{th}$ ciphertext block, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

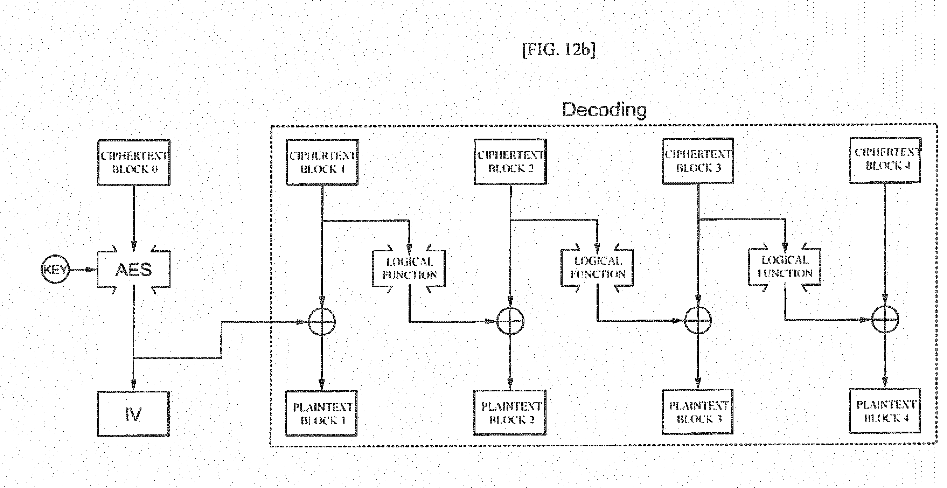

As illustrated in FIG. 12b, the data decryption apparatus 200 may perform a decryption operation on the data encrypted as illustrated in FIG. 12a.

Referring to FIG. 12b, the decryptor 210 may generate the initialization vector IV by applying the AES algorithm to the first ciphertext block (the ciphertext block 0).

Then, the decoder 230 may generate the first plaintext block (the plaintext block 1) by performing the XOR operation on the initialization vector IV and the ciphertext block 1.

Thereafter, the decoder 230 may generate the plaintext blocks 2 to 4 by applying a logical function to the ciphertext block preceding each of the ciphertext blocks 2 to 4, and then, performing the XOR operation on a result of the applying the logical function and each of the ciphertext blocks 2 to 4.

In detail, the decryption operation illustrated in FIG. 12b may be expressed by Equation 18 below.

[Equation 18]

$$IV = D^{BLOCK}(C_0)$$

$$P_1 = IV \text{ XOR } C_1$$

$$P_i = F(C_{i-1}) \text{ XOR } C_i \ (i \geq 2),$$

where $C_i$ represents an $i^{th}$ ciphertext block, $P_i$ represents an $i^{th}$ plaintext block, IV represents an initialization vector, $D^{BLOCK}$ represents a block decryption algorithm, F is a logical function, and XOR represents an XOR operation performed between blocks (for example, a bitwise XOR operation when each of the blocks is a bit sequence).

5. Example using OFB mode

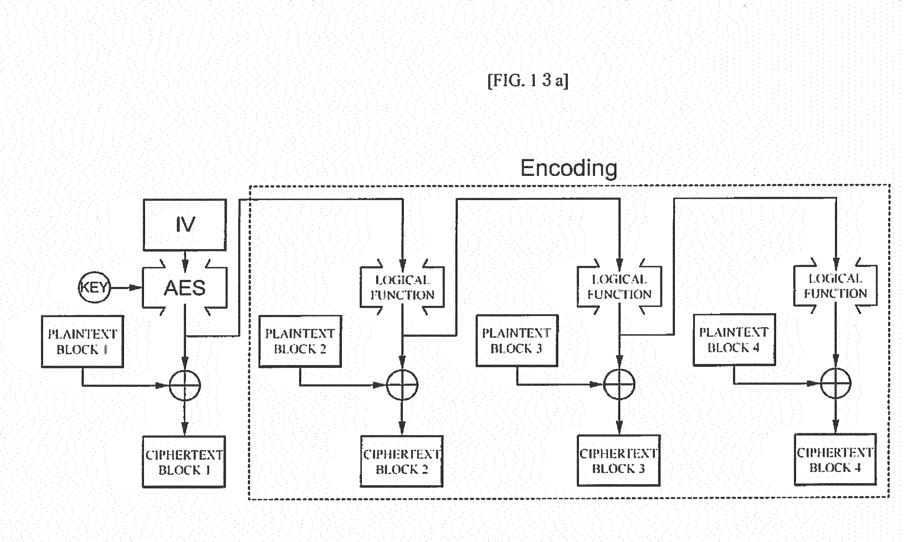

According to an embodiment of the present embodiments, as illustrated in FIG. 13a, the data encryption apparatus 100 may encrypt data using the OFB mode.

Referring to FIG. 13a, the encryptor 130 may generate a first ciphertext block (a ciphertext block 1) by applying the AES algorithm to an initialization vector IV, and then, performing the XOR operation on a block generated by applying the AES algorithm to the initialization vector IV and a first plaintext block (a plaintext block 1).

Then, the encoder 150 may generate ciphertext blocks 2 to 4 by repeatedly applying a logical function to a block generated by applying the AES algorithm to the initialization vector IV, and then, performing an XOR operation on a result of repeatedly applying the logical function and each of plaintext blocks 2 to 4.

In detail, the encryption operation illustrated in FIG. 13a may be expressed by Equation 19 below.

[Equation 19]

$$O_1 = E^{BLOCK}(IV)$$

$$C_1 = O_1 \text{ XOR } P_1$$

$$O_i = F(O_{i-1}) \ (i \geq 2)$$

$$C_i = P_i \text{ XOR } O_i \ (i \geq 2),$$

where $E^{BLOCK}$ represents a block encryption algorithm, IV represents an initialization vector, $O_1$ represents a block generated by applying the block encryption algorithm to the initialization vector IV, $C_i$ represents an $i^{th}$ ciphertext block, $O_i$ represents a block generated by applying a logical function to the $O_1$ i-1 times, $P_i$ represents an $i^{th}$ plaintext block, F represents a logical function, and XOR represents an XOR operation performed between blocks (for example, a bitwise XOR operation when each of the blocks is a bit sequence).

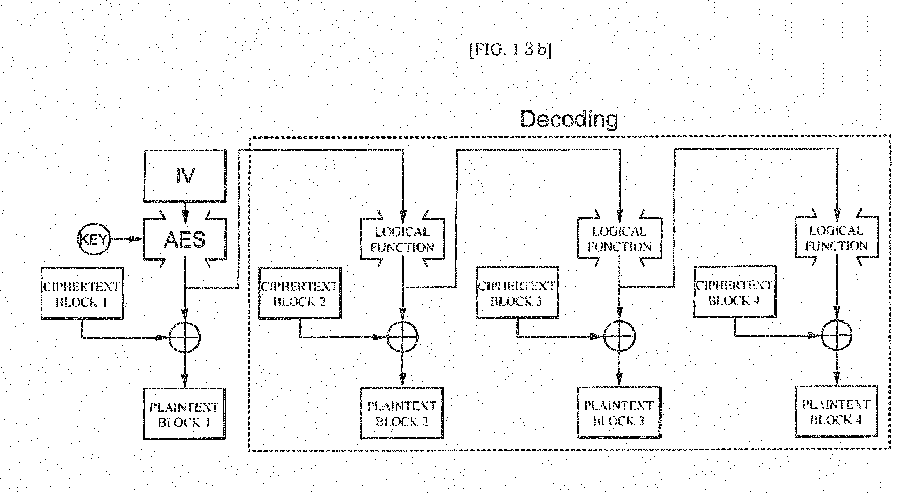

As illustrated in FIG. 13b, the data decryption apparatus 200 may perform a decryption operation on the data encrypted as illustrated in FIG. 13a.

Referring to FIG. 13b, the decryptor 210 may generate the first plaintext block (the plaintext block 1) by applying the AES algorithm to the initialization vector IV, and then, performing the XOR operation on a result of applying the AES algorithm to the initialization vector IV and the first ciphertext block (the ciphertext block 1).

Then, the decoder 230 may generate the plaintext blocks 2 to 4 by repeatedly applying a logical function to the block generated by applying the AES algorithm to the initialization vector IV, and then, performing the XOR operation on a result of repeatedly applying the logical function and each of the ciphertext blocks 2 to 4.

In detail, the decryption operation illustrated in FIG. 13b may be expressed by Equation 20 below.

[Equation 20]

$$O_1 = E^{BLOCK}(IV)$$

$$P_1 = O_1 \text{ XOR } C_1$$

$$O_i = F(O_{i-1}) \ (i \geq 2)$$

where $E^{BLOCK}$ represents a block encryption algorithm, IV represents an initialization vector, $O_1$ represents a block generated by applying the block encryption algorithm to the initialization vector IV, $C_i$ represents an $i^{th}$ ciphertext block, $O_i$ represents a block generated by applying a logical function to the initialization vector IV i times, $P_i$ represents an $i^{th}$ plaintext block, F represents a logical function, and XOR represents an XOR operation performed between blocks (for example, a bitwise XOR operation when each of the blocks is a bit sequence).

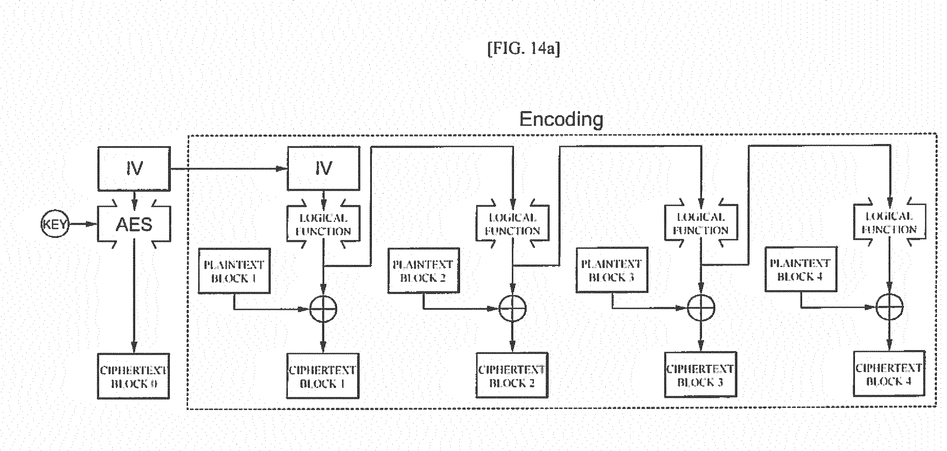

According to another embodiment of the present embodiments, the data encryption apparatus 100 may encrypt data using the OFB mode as illustrated in FIG. 14a,

Referring to FIG. 14a, the encryptor 130 may generate a first ciphertext block (a ciphertext block 0) by applying the AES algorithm to an initialization vector IV.

Then, the encoder 150 may generate ciphertext blocks 1 to 4 by repeatedly applying a logical function to the initialization vector IV, and then, performing the XOR operation on a result generated by repeatedly applying the logical function to the initialization vector IV and each of plain blocks 1 to 4.

In detail, the encryption operation illustrated in FIG. 14a may be expressed by Equation 21 below.

[Equation 21]

$$C_0 = E^{BLOCK}(IV)$$

$$O_1 = F(IV)$$

$$O_i = F(O_{i-1}) \ (i \geq 2)$$

$$C_i = P_i \text{ XOR } O_i \ (i \geq 1),$$

where $C_i$ represents an $i^{th}$ ciphertext block, $O_i$ represents a block generated by applying a logical function to the initialization vector IV i times, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

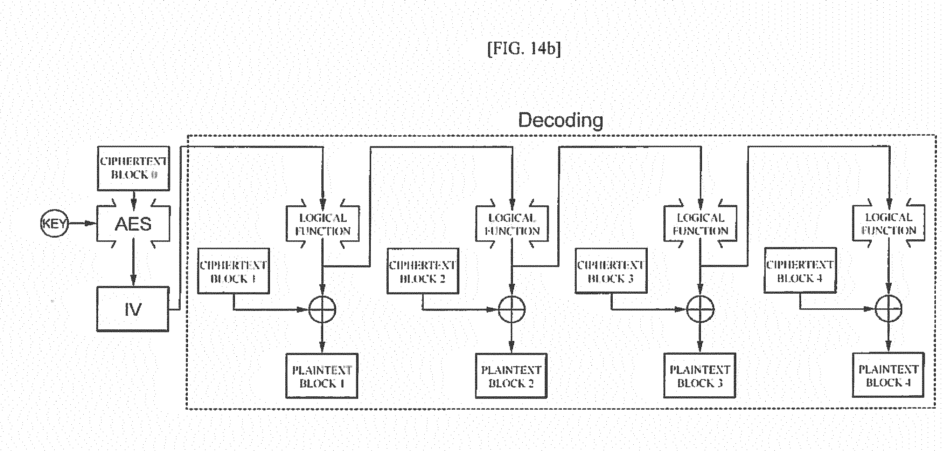

As illustrated in FIG. 14b, the data decryption apparatus 200 may perform a decryption operation on the data encrypted as illustrated in FIG. 14a.

Referring to FIG. 14b, the decryptor 210 may generate the initialization vector IV by applying the AES algorithm to the first ciphertext block (the ciphertext block 0).

Then, the decoder 230 may generate the plaintext blocks 1 to 4 by repeatedly applying a logical function to the initialization vector IV, and then, performing the XOR operation on a block generated by repeatedly applying the logical function to the initialization vector IV and each of the ciphertext blocks 1 to 4.

In detail, a decryption operation illustrated in FIG. 14b may be expressed by in Equation 22 below.

[Equation 22]

$$IV = E^{BLOCK}(C_0)$$

$$O_1 = F(IV)$$

$$O_i = F(O_{i-1}) \ (i \geq 2)$$

$$P_i = C_i \ XOR \ O_i \ (i \geq 1),$$

where $C_i$ represents an $i^{th}$ ciphertext block, $O_i$ represents a block generated by applying a logical function to the initialization vector IV i times, $P_i$ represents an $i^{th}$ plaintext block, IV represents an initialization vector, $E^{BLOCK}$ represents a block encryption algorithm, F represents a logical function, and XOR represents an XOR operation performed between blocks (for example, a bitwise XOR operation when each of the blocks is a bit sequence).

6. Example using CTR mode

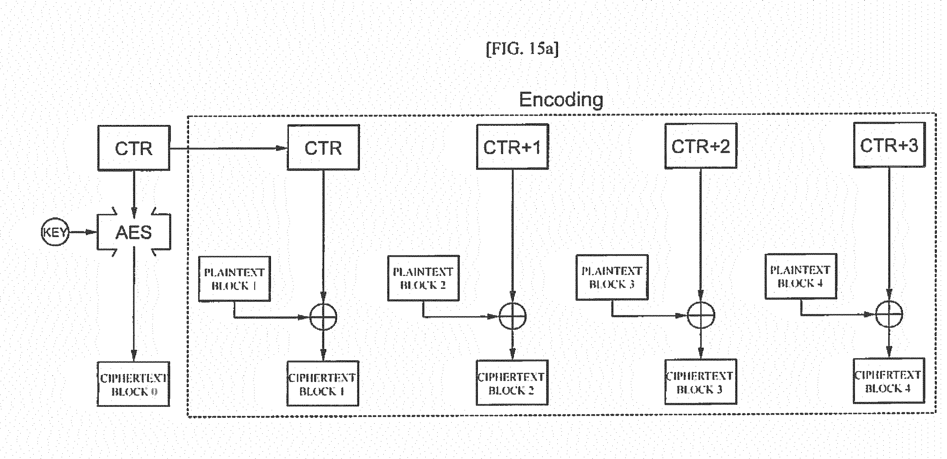

According to an embodiment of the present embodiments, as illustrated in FIG. 15a, the data encryption apparatus 100 may encrypt data using the CTR mode.

Referring to FIG. 15a, the encryptor 130 may generate a ciphertext block 0 by applying the AES algorithm to an initial counter value CTR.

Then, the encoder 150 may generate a ciphertext block 1 by performing the XOR operation on the initial counter value CTR and a plaintext block 1.

Similarly, the encoder 150 may generate an $i^{th}$ ciphertext block by performing the XOR operation on an $i^{th}$ plaintext block and an $i^{th}$ counter value (for example, CTR+i-1 as illustrated in FIG. 15a). In this case, the encoder 150 may generate ciphertext blocks in parallel.

In detail, the encryption operation illustrated in FIG. 15a may be expressed by Equation 23 below.

[Equation 23]

$$C_0 = E^{BLOCK}(CTR)$$

$$C_i = (CTR+i-1) \ XOR \ P_i \ (i \geq 1),$$

where $E^{BLOCK}$ represents the block encryption algorithm, CTR represents an initial counter value, $C_i$ represents an $i^{th}$ ciphertext block, $P_i$ represents an $i^{th}$ plaintext block, and XOR represents an XOR operation performed between blocks (for example, a bitwise XOR operation when each of the blocks is a bit sequence).

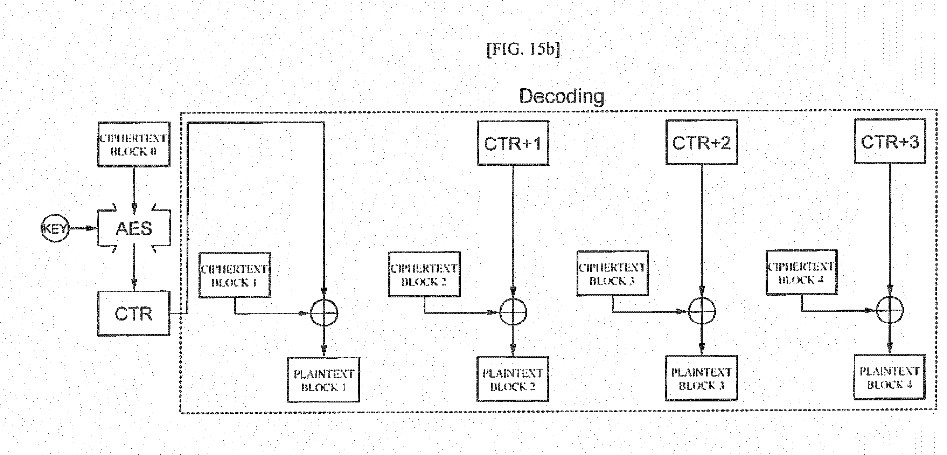

As illustrated in FIG. 15b, the data decryption apparatus 200 may perform a decryption operation on the data encrypted as illustrated in FIG. 15a.

Referring to FIG. 15b, the decryptor 210 may generate an initial counter value by applying the AES algorithm to the ciphertext block 0.

Then, the decoder 230 may generate the plaintext block 1 by performing the XOR operation on the initial counter value CTR and the ciphertext block 1.

Similarly, the decoder 230 may generate the $i^{th}$ plaintext block by performing the XOR operation on the $i^{th}$ ciphertext block and the $i^{th}$ counter value (for example, CTR+i-1 as illustrated in FIG. 15b). The decryptor 210 may generate plaintext blocks in parallel.

In detail, the decryption operation illustrated in FIG. 15b may be expressed by Equation 24 below.

[Equation 24]

$$CTR = E^{BLOCK}(C_0)$$

$$P_i = (CTR+i-1) \text{ XOR } C_i \ (i \geq 1),$$

where $E^{BLOCK}$ represents a block encryption algorithm, CTR represents an initial counter value, $C_i$ represents an $i^{th}$ ciphertext block, $P_i$ represents an $i^{th}$ plaintext block, and XOR represents an XOR operation performed between blocks (for example, a bitwise XOR operation when each of the blocks is a bit sequence).

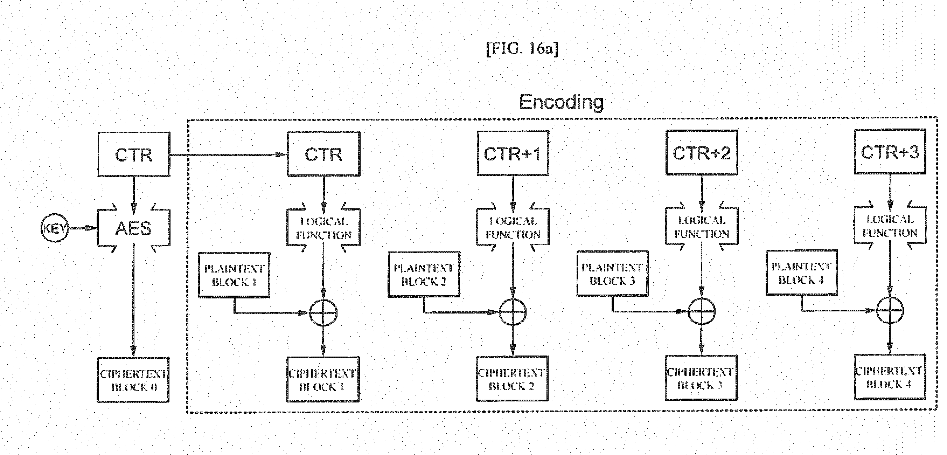

According to another embodiment of the present embodiments, the data encryption apparatus 100 may encrypt data using the CTR mode as illustrated in FIG. 16a.

Referring to FIG. 16a, the encryptor 130 may generate a ciphertext block 0 by applying the AES algorithm to an initial counter value CTR.

Then, the encoder 150 may generate a ciphertext block 1 by applying a logical function to the initial counter value CTR, and then, performing the XOR operation on a result of applying the function to the initial counter value CTR and a plaintext block 1.

Similarly, the encoder 150 may generate an $i^{th}$ ciphertext block by applying a logical function to an $i^{th}$ counter value (for example, CTR+i-1 as illustrated in FIG. 16a), and then, performing the XOR operation on a result of applying the logical function to the $i^{th}$ counter value and an ith plaintext block. The encoder 150 may generate ciphertext blocks in parallel.

In detail, the encryption operation illustrated in FIG. 16a may be expressed by Equation 25 below.

[Equation 25]

$$C_0 = E^{BLOCK}(CTR)$$

$$C_i = F(CTR+i-1) \text{ XOR } P_i \ (i \geq 1),$$

where $E^{BLOCK}$ represents the block encryption algorithm, CTR represents an initial counter value, $C_i$ represents an $i^{th}$ ciphertext block, $P_i$ represents an $i^{th}$ plaintext block, F represents a logical function, and XOR represents an XOR operation performed between blocks (for example, a bitwise XOR operation when each of the blocks is a bit sequence).

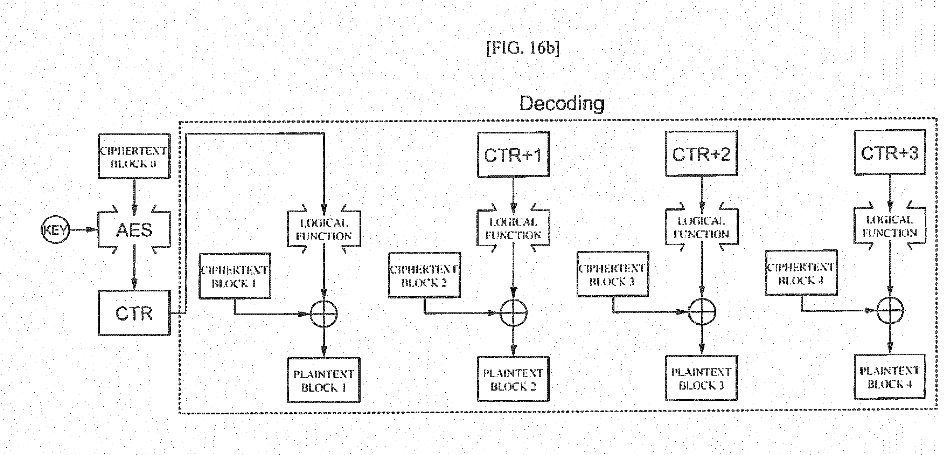

As illustrated in FIG. 16b, the data decryption apparatus 200 may perform a decryption operation on the data encrypted according to the example illustrated in FIG. 16a.

Referring to FIG. 16b, the decryptor 210 may generate the initial counter value CTR by applying the AES algorithm to the first ciphertext block (the ciphertext block 0).

Then, the decoder 230 may generate the plaintext block 1 by applying a logical function to the initial counter value CTR, and then, performing the XOR operation on a result of applying the logical function to the initial counter value CTR and the ciphertext block 1.

Similarly, the decoder 230 may generate the $i^{th}$ plaintext block by applying a logical function to the $i^{th}$ counter value (for example, CTR+i-1 as illustrated in FIG. 16b), and then, performing the XOR operation on a result of applying the logical function to the $i^{th}$ counter value and the $i^{th}$ ciphertext block. The decoder 230 may generate plaintext blocks in parallel.

In detail, the decryption operation illustrated in FIG. 16b may be expressed by Equation 26 below.

[Equation 26]

$$CTR = E^{BLOCK}(C_0)$$

$$P_i = F(CTR+i-1) \text{ XOR } C_i \ (i \geq 1),$$

where $E^{BLOCK}$ represents a block encryption algorithm, CTR represents an initial counter value, $C_i$ represents an $i^{th}$ ciphertext block, $P_i$ represents an $i^{th}$ plaintext block, F represents a logical function, and XOR represents an XOR operation performed between blocks (for example, a bitwise XOR operation when each of the blocks is a bit sequence).

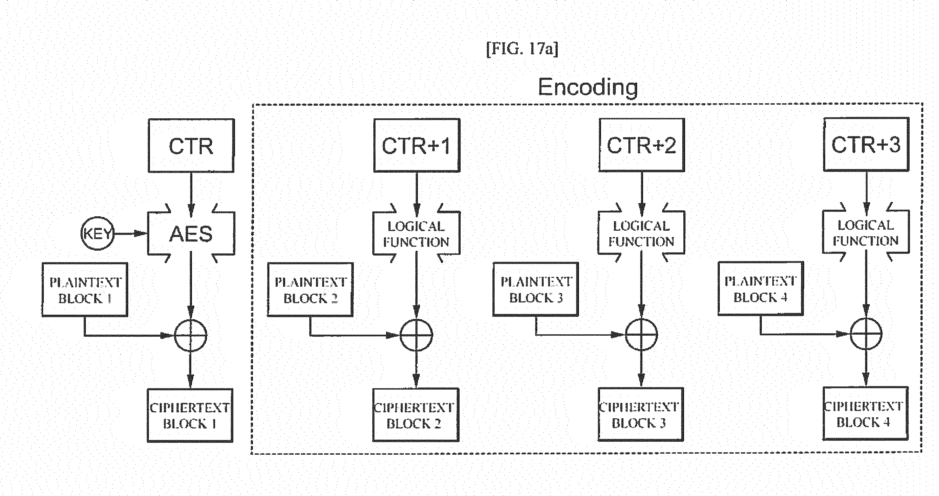

According to another embodiment of the present embodiments, the data encryption apparatus 100 may encrypt data using the CTR mode as illustrated in FIG. 17a.

Referring to FIG. 17a, the encryptor 130 may generate a ciphertext block 1 by applying the AES algorithm to an initial counter value CTR, and then, performing the XOR operation on a result of applying the AES algorithm to the initial counter value CTR and a plaintext block 1.

Then, the encoder 150 may generate an $i^{th}$ ciphertext block by applying a logical function to an $i^{th}$ counter value (for example, CTR+i-1 as illustrated in FIG. 17a), and then, performing the XOR operation on a result of applying the logical function to the $i^{th}$ counter value and an $i^{th}$ plaintext block. The encoder 150 may generate ciphertext blocks in parallel.

In detail, the encryption operation illustrated in FIG. 17a may be expressed by Equation 27 below.

$$[\text{Equation 27}]$$

$$C_1 = E^{BLOCK}(CTR) \text{ XOR } P_1$$

$$C_i = F(CTR+i-1) \text{ XOR } P_i \ (i \geq 2),$$

where $E^{BLOCK}$ represents the block encryption algorithm, CTR represents an initial counter value, $C_i$ represents an $i^{th}$ ciphertext block, $P_i$ represents an $i^{th}$ plaintext block, F represents a logical function, and XOR represents an XOR operation performed between blocks (for example, a bitwise XOR operation when each of the blocks is a bit sequence).

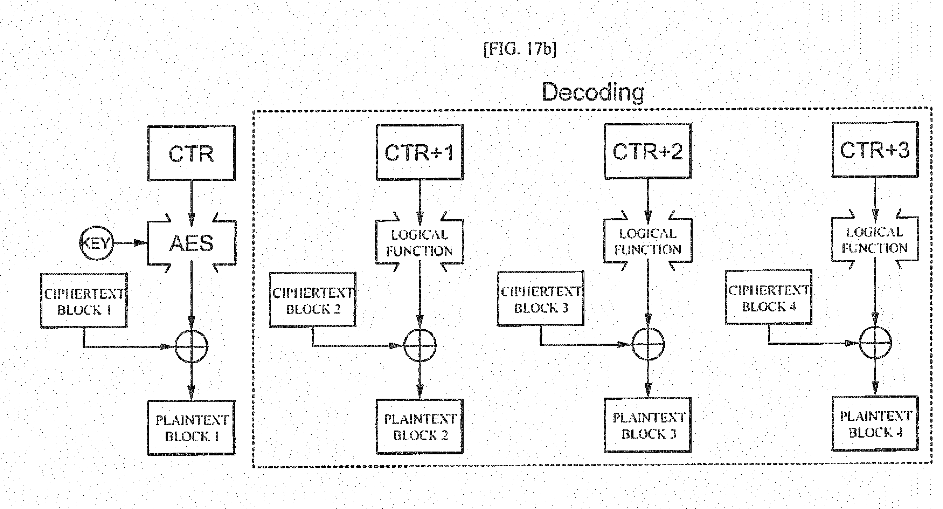

As illustrated in FIG. 17b, the data decryption apparatus 200 may perform a decryption operation on the data encrypted as illustrated in FIG. 17a.

Referring to FIG. 17b, the decryptor 210 may generate the plaintext block 1 by applying the AES algorithm to the first ciphertext block 1, and then, performing the XOR operation on a result of applying the AES algorithm to the first ciphertext block 1 and the ciphertext block 1.

Then, the decoder 230 may generate the $i^{th}$ plaintext block by applying a logical function to the $i^{th}$ counter value (for example, CTR+i-1 as illustrated in FIG. 17b), and then, performing the XOR operation on a result of applying the logical function to the $i^{th}$ counter value and the $i^{th}$ ciphertext block. The decoder 230 may generate plaintext blocks in parallel.

In detail, the decryption operation illustrated in FIG. 17b may be expressed by Equation 28 below.

$$[\text{Equation 28}]$$

$$P_1 = E^{BLOCK}(CTR) \text{ XOR } C_1$$

$$P_i = F(CTR+i-1) \text{ XOR } C_i \ (i \geq 2),$$

where $E^{BLOCK}$ represents the block encryption algorithm, CTR represents an initial counter value, $C_i$ represents an $i^{th}$ ciphertext block, $P_i$ represents an $i^{th}$ plaintext block, F represents a logical function, and XOR represents an XOR operation performed between blocks (for example, a bitwise XOR operation when each of the blocks is a bit sequence).

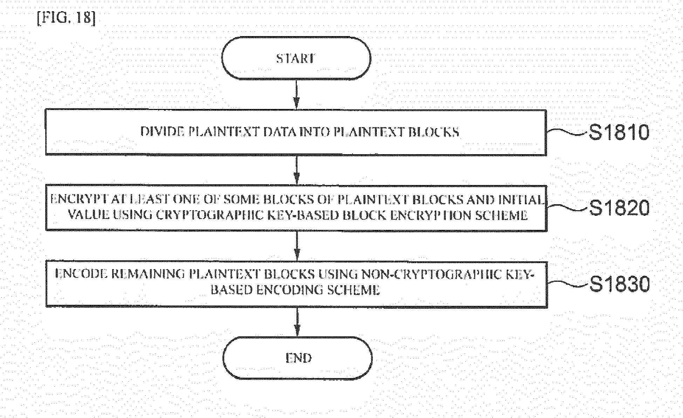

FIG. 18 is a flowchart of a data encryption method according to an embodiment of the present embodiments.

The data encryption method of FIG. 18 may be performed by, for example, the data encryption apparatus 100 of FIG. 1.

Referring to FIG. 18, the data encryption apparatus 100 divides plaintext data to be encrypted into a plurality of plaintext blocks (S1810).

Next, the data encryption apparatus 100 encrypts at least one among some of the plurality of plaintext blocks and an initial value using the cryptographic key-based block encryption scheme (S1820).

Thereafter, the data encryption apparatus 100 encodes the remaining plaintext blocks, which have not been encrypted, using a non-cryptographic key-based encoding scheme (S1830).

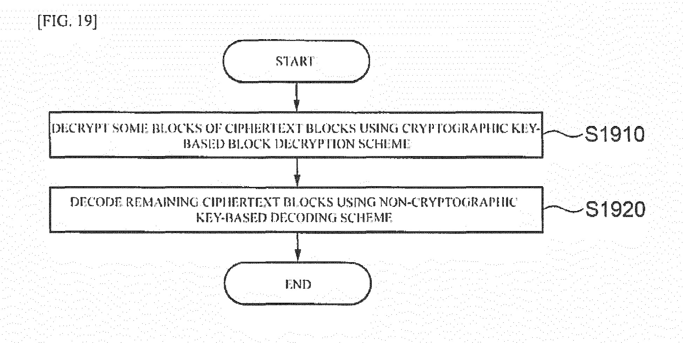

FIG. 19 is a flowchart of a data decryption method according to an embodiment of the present embodiments.

The data decryption method of FIG. 19, may be performed by, for example, the data decryption apparatus 200 of FIG. 2.

Referring to FIG. 19, the data decryption apparatus 200 decrypts at least one among some blocks of encrypted data and an initial value using the cryptographic key-based block decryption scheme (S1910).

Next, the data encryption apparatus 200 decodes the remaining blocks of the encrypted data, which have not been decrypted, using the non-cryptographic key-based decoding scheme (S1920).

Embodiments may include a computer-readable storage medium having stored therein a program for executing the methods described herein on a computer. The computer-readable storage medium may include program commands, local data files, local data structures, or a combination thereof. The computer-readable storage medium may be specially designed and configured for the present embodiments. Examples of the computer-readable storage medium include magnetic media such as a hard disk, a floppy disk, and a magnetic tape, optical media such as CD-ROM and a DVD, magneto-optical media such as a floptical disk and hardware devices, such as a ROM, a RAM and a flash memory, specially designed to store and carry out programs. Examples of the program commands may include not only a machine language code made by a complier but also high-level language code executable in a computer using by an interpreter or the like.

While exemplary embodiments of the present embodiments have been described above in detail, it may be understood by one of ordinary skill in the art that various changes may be made without departing from the scope of the present embodiments. Therefore, the scope of the present embodiments should be defined not by the detailed description, but by the appended claims and equivalents thereof.

[Reference Numerals]

100: Data encryption apparatus
110: Divider
130: Encryptor
150: Encoder
170: Initial value generator
200: Data decryption apparatus
210: Decryptor
230: Decoder
250: Initial value generator

**Claims**

1. A data encryption apparatus (100) comprising:

   a divider (110) configured to divide (S1810) data into a plurality of data blocks;
   an encryptor (130) configured to encrypt (S1820) at least one data block from a first data block group comprising one or more data blocks, among the plurality of data blocks, and an initial value using a cryptographic key-based block encryption scheme; and
   an encoder (150) configured to sequentially encode (S1830), using an encoding scheme which is not based on a cryptographic key, remaining data blocks from a second data block group comprising one or more data blocks, which are not encrypted by the cryptographic key-based block encryption scheme, among the plurality of data blocks, wherein each of the remaining data blocks is encoded using either an encrypted or encoded data block generated in the preceding encryption or encoding operation, or the encrypted or encoded data block generated in the preceding encryption or encoding operation and the data block used in the preceding encryption or encoding operation.

2. The data encryption apparatus (100) of claim 1, wherein the cryptographic key-based block encryption scheme comprises one of an encryption scheme using a symmetric key, an encryption scheme using an asymmetric key and a white box-based encryption scheme.

3. The data encryption apparatus (100) of claim 1, wherein the encoding scheme which is not based on a cryptographic key comprises an encoding scheme using at least one among a logical operation, a one-way function, a one-way permutation, and a logical function.

4. The data encryption apparatus (100) of claim 1, wherein the initial value comprises an initialization vector or a counter value.

5. The data encryption apparatus (100) of claim 4, wherein the encryptor (130) encrypts the at least one data block from the first data block group using the initialization vector or the counter value.

6. A data decryption apparatus (200) comprising:

a decryptor (210) configured to decrypt (S1910) one or more first data blocks of an encrypted data and an initial value using a cryptographic key-based block decryption scheme; and
a decoder (230) configured to sequentially decode (S1920) remaining second data blocks of the encrypted data different from the one or more first data blocks, using a decoding scheme which is not based on a cryptographic key, wherein each of the remaining second data blocks is decoded using either an encrypted or encoded data block used in the preceding decryption or decoding operation, or a decrypted or decoded data block generated in the preceding decryption or decoding operation and the encrypted or encoded data block used in the preceding decryption or decoding operation.

7. The data decryption apparatus (200) of claim 6, wherein the cryptographic key-based block decryption scheme comprises one of a decryption scheme using a symmetric key, a decryption scheme using an asymmetric key and a white box-based decryption scheme.

8. The data decryption apparatus (200) of claim 6, wherein the decoding scheme which is not based on a cryptographic key comprises a decoding scheme using at least one among a logical operation, a one-way function, a one-way permutation, and a logical function.

9. A data encryption method comprising:

dividing (S1810) data into a plurality of data blocks;
encrypting (S1820) at least one data block from a first data block group comprising one or more data blocks, among the plurality of data blocks, and an initial value using a cryptographic key-based block encryption scheme; and
sequentially encoding (S1830) remaining data blocks, which are not encrypted by the cryptographic key-based block encryption scheme, using an encoding scheme which is not based on a cryptographic key, wherein each of the remaining data blocks is encoded using either an encrypted or encoded data block generated in the preceding encryption or encoding operation, or the encrypted or encoded data block generated in the preceding encryption or encoding operation and the data block used in the preceding encryption or encoding operation.

10. The data encryption method of claim 9, wherein the cryptographic key-based block encryption scheme comprises one of an encryption scheme using a symmetric key, an encryption scheme using an asymmetric key and a white box-based encryption scheme.

11. The data encryption method of claim 9, wherein the encoding scheme which is not based on a cryptographic key comprises an encoding scheme using at least one among a logical operation, a one-way function, a one-way permutation, and a logical function.

12. The data encryption method of claim 9, further comprising:
the initial value comprising an initialization vector or a counter value.

13. The data encryption method of claim 9, wherein the encrypting of at least one data block from the first data block group comprises encrypting the at least one data block from the first data block group using the initialization vector or the counter value.

14. A data decryption method comprising:

decrypting (S1910) one or more first data blocks of an encrypted data and an initial value using a cryptographic key-based block decryption scheme; and
sequentially decoding (S1920) remaining second data blocks of the encrypted data different from the one or more first data blocks, using a decoding scheme which is not based on a cryptographic key, wherein each of the remaining second data blocks is decoded using either an encrypted or encoded data block used in the preceding decryption or decoding operation, or a decrypted or decoded data block generated in the preceding decryption or decoding operation and the encrypted or encoded data block used in the preceding decryption or decoding operation.

15. The data decryption method of claim 14, wherein the cryptographic key-based block decryption scheme comprises one of a decryption scheme using a symmetric key, a decryption scheme using an asymmetric key and a white box-based decryption scheme, and/or wherein the decoding scheme which is not based on a cryptographic key comprises a decoding scheme using at least one among a logical operation, a one-way function, a one-way permutation, and a logical function.

**Patentansprüche**

1. Datenverschlüsselungsvorrichtung (100), umfassend:

    einen Teiler (110), der so konfiguriert ist, dass er die Daten in eine Vielzahl von Datenblöcken aufteilt (S1810); einen Verschlüsseler (130), der so konfiguriert ist, dass er mindestens einen Datenblock aus einer ersten Datenblockgruppe, die einen oder mehrere Datenblöcke aus der Vielzahl von Datenblöcken umfasst, und einen Anfangswert unter Verwendung eines auf einem kryptographischen Schlüssel basierenden Blockverschlüsselungsschemas verschlüsselt (S1820); und einen Codierer (150), der so konfiguriert ist, dass er unter Verwendung eines Codierungsschemas, das nicht auf einem kryptographischen Schlüssel basiert, verbleibende Datenblöcke aus einer zweiten Datenblockgruppe, die einen oder mehrere Datenblöcke umfasst, die nicht durch das auf einem kryptographischen Schlüssel basierende Blockverschlüsselungsschema verschlüsselt sind, unter der Vielzahl von Datenblöcken sequentiell codiert (S1830), wobei jeder der verbleibenden Datenblöcke entweder unter Verwendung eines verschlüsselten oder codierten Datenblocks, der in der vorhergehenden Verschlüsselungs- oder Codierungsoperation erzeugt wurde, oder des verschlüsselten oder codierten Datenblocks, der in der vorhergehenden Verschlüsselungs- oder Codierungsoperation erzeugt wurde, und des Datenblocks, der in der vorhergehenden Verschlüsselungs- oder Codierungsoperation verwendet wurde, codiert wird.

2. Datenverschlüsselungsvorrichtung (100) nach Anspruch 1, wobei das auf einem kryptographischen Schlüssel basierende Blockverschlüsselungsschema eines aus einem Verschlüsselungsschema, das einen symmetrischen Schlüssel verwendet, einem Verschlüsselungsschema, das einen asymmetrischen Schlüssel verwendet, und einem White-Box-basierten Verschlüsselungsschema umfasst.

3. Datenverschlüsselungsvorrichtung (100) nach Anspruch 1, wobei das Codierungsschema, das nicht auf einem kryptographischen Schlüssel basiert, ein Codierungsschema umfasst, das mindestens eine aus einer logischen Operation, einer Einwegfunktion, einer Einwegpermutation und einer logischen Funktion verwendet.

4. Datenverschlüsselungsvorrichtung (100) nach Anspruch 1, wobei der Anfangswert einen Initialisierungsvektor oder einen Zählerwert umfasst.

5. Datenverschlüsselungsvorrichtung (100) nach Anspruch 4, wobei der Verschlüsseler (130) den mindestens einen Datenblock aus der ersten Datenblockgruppe unter Verwendung des Initialisierungsvektors oder des Zählerwertes verschlüsselt.

6. Datenentschlüsselungsvorrichtung (200), umfassend:

    einen Entschlüsseler (210), der so konfiguriert ist, dass er einen oder mehrere erste Datenblöcke verschlüsselter Daten und einen Anfangswert unter Verwendung eines auf einem kryptographischen Schlüssel basierenden Blockentschlüsselungsschemas entschlüsselt (S1910); und einen Decoder (230), der so konfiguriert ist, dass er die verbleibenden zweiten Datenblöcke der verschlüsselten Daten, die sich von den einen oder mehreren ersten Datenblöcken unterscheiden, sequentiell decodiert (S1920), wobei er ein Decodierungsschema verwendet, das nicht auf einem kryptographischen Schlüssel basiert, wobei jeder der verbleibenden zweiten Datenblöcke entweder unter Verwendung eines verschlüsselten oder codierten Datenblocks, der in der vorhergehenden Entschlüsselungs- oder Decodierungsoperation verwendet wurde, oder eines entschlüsselten oder decodierten Datenblocks, der in der vorhergehenden Entschlüsselungs- oder Decodierungsoperation erzeugt wurde, und des verschlüsselten oder codierten Datenblocks, der in der vorhergehenden Entschlüsselungs- oder Decodierungsoperation verwendet wurde, decodiert wird.

7. Datenentschlüsselungsvorrichtung (200) nach Anspruch 6, wobei das auf einem kryptographischen Schlüssel basierende Blockentschlüsselungsschema eines aus einem Entschlüsselungsschema, das einen symmetrischen Schlüssel verwendet, einem Entschlüsselungsschema, das einen asymmetrischen Schlüssel verwendet, und einem White-Box-basierten Entschlüsselungsschema umfasst.

8. Datenentschlüsselungsvorrichtung (200) Anspruch 6, wobei das Decodierungsschema, das nicht auf einem kryptographischen Schlüssel basiert, ein Decodierungsschema umfasst, das mindestens eine aus einer logischen Operation, einer Einwegfunktion, einer Einwegpermutation und einer logischen Funktion verwendet.

9. Datenverschlüsselungsverfahren, umfassend:

   Aufteilen (S1810) der Daten in eine Vielzahl von Datenblöcken;
   Verschlüsseln (S1820) von mindestens einem Datenblock aus einer ersten Datenblockgruppe, die einen oder mehrere Datenblöcke aus der Vielzahl von Datenblöcken umfasst, und einem Anfangswert unter Verwendung eines auf einem kryptographischen Schlüssel basierenden Blockverschlüsselungsschemas; und
   sequentielles Codieren (S1830) der verbleibenden Datenblöcke, die nicht durch das auf einem kryptographischen Schlüssel basierende Blockverschlüsselungsschema verschlüsselt sind, unter Verwendung eines Codierungsschemas, das nicht auf einem kryptographischen Schlüssel basiert, wobei jeder der verbleibenden Datenblöcke entweder unter Verwendung eines verschlüsselten oder codierten Datenblocks, der in der vorhergehenden Verschlüsselungs- oder Codierungsoperation erzeugt wurde, oder des verschlüsselten oder codierten Datenblocks, der in der vorhergehenden Verschlüsselungs- oder Codierungsoperation erzeugt wurde, und des Datenblocks, der in der vorhergehenden Verschlüsselungs- oder Codierungsoperation verwendet wurde, codiert wird.

10. Datenverschlüsselungsverfahren nach Anspruch 9, wobei das auf einem kryptographischen Schlüssel basierende Blockverschlüsselungsschema eines aus einem Verschlüsselungsschema, das einen symmetrischen Schlüssel verwendet, einem Verschlüsselungsschema, das einen asymmetrischen Schlüssel verwendet, und einem White-Box-basierten Verschlüsselungsschema umfasst.

11. Datenverschlüsselungsverfahren nach Anspruch 9, wobei das Codierungsschema, das nicht auf einem kryptographischen Schlüssel basiert, ein Codierungsschema umfasst, das mindestens eine aus einer logischen Operation, einer Einwegfunktion, einer Einwegpermutation und einer logischen Funktion verwendet.

12. Datenverschlüsselungsverfahren nach Anspruch 9, des Weiteren umfassend:
    den Anfangswert, der einen Initialisierungsvektor oder einen Zählerwert umfasst.

13. Datenverschlüsselungsverfahren nach Anspruch 9, wobei das Verschlüsseln mindestens eines Datenblocks aus der ersten Datenblockgruppe das Verschlüsseln des mindestens einen Datenblocks aus der ersten Datenblockgruppe unter Verwendung des Initialisierungsvektors oder des Zählerwerts umfasst.

14. Datenentschlüsselungsverfahren, umfassend:

    Entschlüsseln (S1910) von einem oder mehreren ersten Datenblöcken verschlüsselter Daten und eines Anfangswerts unter Verwendung eines auf einem kryptographischen Schlüssel basierenden Blockentschlüsselungsschemas; und
    sequentielles Decodieren (S1920) der verbleibenden zweiten Datenblöcke der verschlüsselten Daten, die sich von den einen oder mehreren ersten Datenblöcken unterscheiden, unter Verwendung eines Decodierungsschemas, das nicht auf einem kryptographischen Schlüssel basiert, wobei jeder der verbleibenden zweiten Datenblöcke entweder unter Verwendung eines verschlüsselten oder codierten Datenblocks, der in der vorhergehenden Entschlüsselungs- oder Decodierungsoperation verwendet wurde, oder eines entschlüsselten oder decodierten Datenblocks, der in der vorhergehenden Entschlüsselungs- oder Decodierungsoperation erzeugt wurde, und des verschlüsselten oder codierten Datenblocks, der in der vorhergehenden Entschlüsselungs- oder Decodierungsoperation verwendet wurde, decodiert wird.

15. Datenentschlüsselungsverfahren nach Anspruch 14, wobei das auf einem kryptographischen Schlüssel basierende Blockentschlüsselungsschema eines aus einem Entschlüsselungsschema umfasst, das einen symmetrischen Schlüssel verwendet, einem Entschlüsselungsschema, das einen asymmetrischen Schlüssel verwendet, und einem White-Box-basierten Entschlüsselungsschema, und/oder wobei das Decodierungsschema, das nicht auf einem kryptographischen Schlüssel basiert, ein Decodierungsschema umfasst, das mindestens eine aus einer logischen Operation, einer Einwegfunktion, einer Einwegpermutation und einer logischen Funktion verwendet.

**Revendications**

1. Dispositif de chiffrement de données (100) comprenant :

   un diviseur (110) configuré pour diviser (S1810) des données en une pluralité de blocs de données ;
   un chiffreur (130) configuré pour chiffrer (S1820) au moins un bloc de données issu d'un premier groupe de blocs de données comprenant un ou plusieurs blocs de données, parmi la pluralité de blocs de données, et une valeur initiale au moyen d'un schéma de chiffrement de bloc reposant sur une clé cryptographique ; et
   un encodeur (150) configuré pour encoder séquentiellement (S1830), au moyen d'un schéma d'encodage qui ne repose pas sur une clé cryptographique, des blocs de données restants issus d'un deuxième groupe de blocs de données comprenant un ou plusieurs blocs de données, qui ne sont pas chiffrés par le schéma de chiffrement de bloc reposant sur une clé cryptographique, parmi la pluralité de blocs de données, dans lequel chacun des blocs de données restants est encodé en utilisant soit un bloc de données chiffré ou encodé généré lors de la précédente opération de chiffrement ou d'encodage, soit le bloc de données chiffré ou encodé généré lors de la précédente opération de chiffrement ou d'encodage et le bloc de données utilisé lors de la précédente opération de chiffrement ou d'encodage.

2. Le dispositif de chiffrement de données (100) de la revendication 1, dans lequel le schéma de chiffrement de bloc reposant sur une clé cryptographique comprend un d'un schéma de chiffrement utilisant une clé symétrique, un schéma de chiffrement utilisant une clé asymétrique et un schéma de chiffrement reposant sur une boîte blanche.

3. Le dispositif de chiffrement de données (100) de la revendication 1,
   dans lequel le schéma d'encodage qui ne repose pas sur une clé cryptographique comprend un schéma d'encodage utilisant au moins une parmi une opération logique, une fonction unidirectionnelle, une permutation unidirectionnelle et une fonction logique.

4. Le dispositif de chiffrement de données (100) de la revendication 1, dans lequel la valeur initiale comprend un vecteur d'initialisation ou une valeur de compteur.

5. Le dispositif de chiffrement de données (100) de la revendication 4, dans lequel le chiffreur (130) chiffre l'au moins un bloc de données issu du premier groupe de blocs de données en utilisant le vecteur d'initialisation ou la valeur de compteur.

6. Dispositif de déchiffrement de données (200) comprenant :

   un déchiffreur (210) configuré pour déchiffrer (S1910) un ou plusieurs premiers blocs de données de données chiffrées et une valeur initiale en utilisant un schéma de déchiffrement de bloc reposant sur une clé cryptographique ; et
   un décodeur (230) configuré pour décoder séquentiellement (S1920) des deuxièmes blocs de données restants des données chiffrées différents de l'un ou plusieurs premiers blocs de données, en utilisant un schéma de décodage qui ne repose pas sur une clé cryptographique, dans lequel chacun des deuxièmes blocs de données restants est décodé en utilisant soit un bloc de données chiffré ou encodé utilisé dans l'opération de déchiffrement ou de décodage précédente, soit un bloc de données déchiffré ou décodé généré lors de l'opération de déchiffrement ou de décodage précédente et le bloc de données chiffré ou encodé utilisé lors de l'opération de déchiffrement ou de décodage précédente.

7. Le dispositif de déchiffrement de données (200) de la revendication 6, dans lequel le schéma de déchiffrement de bloc reposant sur une clé cryptographique comprend un d'un schéma de déchiffrement utilisant une clé symétrique, un schéma de déchiffrement utilisant une clé asymétrique et un schéma de déchiffrement reposant sur une boîte blanche.

**8.** Le dispositif de déchiffrement de données (200) de la revendication 6, dans lequel le schéma de décodage qui ne repose pas sur une clé cryptographique comprend un schéma de décodage utilisant au moins une parmi une opération logique, une fonction unidirectionnelle, une permutation unidirectionnelle et une fonction logique.

**9.** Procédé de chiffrement de données comprenant :

division (S1810) de données en une pluralité de blocs de données ;
chiffrement (S1820) d'au moins un bloc de données issu d'un premier groupe de blocs de données comprenant un ou plusieurs blocs de données, parmi la pluralité de blocs de données, et d'une valeur initiale au moyen d'un schéma de chiffrement de bloc reposant sur une clé cryptographique ; et
encodage séquentiel (S1830) de blocs de données restants, qui ne sont pas chiffrés par le schéma de chiffrement de bloc reposant sur une clé cryptographique, en utilisant un schéma d'encodage qui ne repose pas sur une clé cryptographique, dans lequel chacun des blocs de données restants est encodé en utilisant soit un bloc de données chiffré ou encodé généré lors de l'opération de chiffrement ou d'encodage précédente, soit le bloc de données chiffré ou encodé généré lors de l'opération de chiffrement ou d'encodage précédente et le bloc de données utilisé lors de l'opération de chiffrement ou d'encodage précédente.

**10.** Le procédé de chiffrement de données de la revendication 9, dans lequel le schéma de chiffrement de bloc reposant sur une clé cryptographique comprend un d'un schéma de chiffrement utilisant une clé symétrique, un schéma de chiffrement utilisant une clé asymétrique et un schéma de chiffrement reposant sur une boîte blanche.

**11.** Le procédé de chiffrement de données de la revendication 9, dans lequel le schéma d'encodage qui ne repose pas sur une clé cryptographique comprend un schéma d'encodage utilisant au moins une parmi une opération logique, une fonction unidirectionnelle, une permutation unidirectionnelle et une fonction logique.

**12.** Le procédé de chiffrement de données de la revendication 9, comprenant en outre :
la valeur initiale comprenant un vecteur d'initialisation ou une valeur de compteur.

**13.** Le procédé de chiffrement de données de la revendication 9, dans lequel le chiffrement d'au moins un bloc de données issu du premier groupe de blocs de données comprend un chiffrement de l'au moins un bloc de données issu du premier groupe de blocs de données en utilisant le vecteur d'initialisation ou la valeur de compteur.

**14.** Procédé de déchiffrement de données comprenant :

déchiffrement d'un ou plusieurs premiers blocs de données de données chiffrées et d'une valeur initiale en utilisant un schéma de déchiffrement de bloc reposant sur une clé cryptographique ; et
encodage séquentiel (S1920) des deuxièmes blocs de données restants des données chiffrées différents de l'un ou plusieurs premiers blocs de données, en utilisant un schéma de décodage qui ne repose pas sur une clé cryptographique, dans lequel chacun des deuxièmes blocs de données restants est décodé en utilisant soit un bloc de données chiffré ou encodé utilisé lors de la précédente opération de déchiffrement ou de décodage, soit un bloc de données déchiffré ou décodé généré lors de la précédente opération de déchiffrement ou de décodage et le bloc de données chiffré ou encodé utilisé lors de la précédente opération de déchiffrement ou de décodage.

**15.** Le procédé de déchiffrement de données de la revendication 14, dans lequel le schéma de déchiffrement de bloc reposant sur une clé cryptographique comprend un d'un schéma de déchiffrement utilisant une clé symétrique, un schéma de déchiffrement utilisant une clé asymétrique et un schéma de déchiffrement reposant sur une boîte blanche et/ou dans lequel le schéma de décodage qui ne repose pas sur une clé cryptographique comprend un schéma de décodage utilisant au moins une parmi une opération logique, une fonction unidirectionnelle, une permutation unidirectionnelle et une fonction logique.

[FIG. 1]

[FIG. 2]

[FIG. 3 a]

Encoding

EP 3 300 294 B1

[FIG. 3 b]

Decoding

| CIPHERTEXT BLOCK 1 |

KEY → AES

| PLAINTEXT BLOCK 1 |

| CIPHERTEXT BLOCK 2 |

LOGICAL FUNCTION

| PLAINTEXT BLOCK 2 |

| CIPHERTEXT BLOCK 3 |

LOGICAL FUNCTION

| PLAINTEXT BLOCK 3 |

| CIPHERTEXT BLOCK 4 |

LOGICAL FUNCTION

| PLAINTEXT BLOCK 4 |

[FIG. 4a]

Encoding

EP 3 300 294 B1

[FIG. 4b]

Decoding

EP 3 300 294 B1

[FIG. 5a]

Encoding

EP 3 300 294 B1

[FIG. 5b]

Decoding

EP 3 300 294 B1

[FIG. 6a]

Encoding

[FIG. 6b]

Decoding

[FIG. 7a]

Encoding

[FIG. 7b]

## Decoding

EP 3 300 294 B1

[FIG. 8a]

Encoding

EP 3 300 294 B1

EP 3 300 294 B1

[FIG. 8b]

Decoding

[FIG. 9a]

Encoding

[FIG. 9b]

Decoding

EP 3 300 294 B1

[FIG. 10a]

[FIG. 10b]

[FIG. 1a]

Encoding

[FIG. 11b]

Decoding

[FIG. 12a]

Encoding

[FIG. 12b]

Decoding

EP 3 300 294 B1

[FIG. 1 3 a]

Encoding

EP 3 300 294 B1

[FIG. 1 3 b]

Decoding

EP 3 300 294 B1

[FIG. 14a]

Encoding

EP 3 300 294 B1

[FIG. 14b]

Decoding

[FIG. 15a]

Encoding

EP 3 300 294 B1

[FIG. 15b]

## Decoding

EP 3 300 294 B1

[FIG. 16a]

Encoding

[FIG. 16b]

Decoding

EP 3 300 294 B1

[FIG. 17a]

## Encoding

EP 3 300 294 B1

[FIG. 17b]

## Decoding

EP 3 300 294 B1

[FIG. 18]

```
                          ┌─────────────┐
                          │    START    │
                          └─────────────┘
                                 │
                                 ▼
        ┌────────────────────────────────────────────────────┐
        │     DIVIDE PLAINTEXT DATA INTO PLAINTEXT BLOCKS     │──── S1810
        └────────────────────────────────────────────────────┘
                                 │
                                 ▼
        ┌────────────────────────────────────────────────────┐
        │  ENCRYPT AT LEAST ONE OF SOME BLOCKS OF PLAINTEXT   │
        │  BLOCKS AND INITIAL VALUE USING CRYPTOGRAPHIC KEY-  │──── S1820
        │         BASED BLOCK ENCRYPTION SCHEME              │
        └────────────────────────────────────────────────────┘
                                 │
                                 ▼
        ┌────────────────────────────────────────────────────┐
        │  ENCODE REMAINING PLAINTEXT BLOCKS USING NON-      │
        │   CRYPTOGRAPHIC KEY-BASED ENCODING SCHEME         │──── S1830
        └────────────────────────────────────────────────────┘
                                 │
                                 ▼
                          ┌─────────────┐
                          │     END     │
                          └─────────────┘
```

[FIG. 19]

START

DECRYPT SOME BLOCKS OF CIPHERTEXT BLOCKS USING CRYPTOGRAPHIC KEY-BASED BLOCK DECRYPTION SCHEME — S1910

DECODE REMAINING CIPHERTEXT BLOCKS USING NON-CRYPTOGRAPHIC KEY-BASED DECODING SCHEME — S1920

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004028227 A1

- US 2012281832 A1

**Non-patent literature cited in the description**

- Robust Blind and Secure Biometric Watermarking Based on Partial Multi-Map Chaotic Encryption. **EL-MAHALLAWY M S et al.** NEW TECHNOLOGIES, MOBILITY AND SECURITY (NTMS), 2011 4TH IFIP INTERNATIONAL CONFERENCE ON. IEEE, 07 February 2011